# EUROPEAN PATENT SPECIFICATION

(11) **EP 4 348 425 B1**
(45) Date of publication and mention of the grant of the patent: **31.12.2025**
(21) Application number: 22738120.9
(22) Date of filing: 03.06.2022
(51) Int. Cl.: G06F 9/50

(54) **DYNAMIC COMPUTATIONAL RESOURCE ALLOCATION**
DYNAMISCHE ZUWEISUNG VON COMPUTERRESSOURCEN
ATTRIBUTION DYNAMIQUE DE RESSOURCES DE CALCUL

(30) Priority: 04.06.2021 US 202163196757 P
(43) Date of publication of application: 10.04.2024
(73) Proprietor: Ab Initio Technology LLC, Lexington, MA 02421 (US)
(72) Inventor: SCHMIDT, Stephen, J., Medford, MA 02155 (US); RICARDO, David, Cambridge, MA 02139 (US); STANFILL, Craig, W., Lincoln, MA 01773 (US); CHU, Jacky, Cheuk Kei, Brighton, MA 02135 (US); VISHNIAC, Ephraim, Meriwether, Arlington, MA 02474 (US)
(74) Representative: Herrmann, Daniel
(86) International application number: PCT/US2022/032139
(87) International publication number: WO 2022/256638

(56) References cited:
- US-A1- 2016 246 626
- US-A1- 2020 257 556

## Description

### CROSS-REFERENCES TO RELATED APPLICATIONS

This application claims the benefit of U.S. Provisional Application No. 63/196,757 filed June 4th, 2021.

### BACKGROUND

This description relates to dynamic resource allocation in a computing system.

Applications that run on computing systems require a portion of the computing system's computational resources to do so. The computing system must therefore manage allocation of its resources to applications running thereon. Some examples of resources that are allocated to applications include access to a portion of the computing system's memory, access to file data, and access to a required amount of processing power.

In distributed computing systems, computational resources (including data storage and processing resources) are distributed among a number of servers included in one or more clusters that work together to run data processing applications. In some examples, distributed computing systems use a centralized resource manager, which both schedules execution of applications on the computing system and manages allocation of the computing system's distributed resources to the applications. Examples of resource managers include "Hadoop YARN" and "Kubernetes."

US 2016/246626 A1 discloses: Implementations of the disclosure provide for mechanisms for resource reconciliation in a virtualized computer system. A method of the disclosure includes receiving a request initiated by a user to allocate a first amount of a resource; determining, using a processing device, whether the request can be fulfilled in view of a second amount of the resource available in a virtualized computer system; and allocating the second amount of the resource for the user in response to determining that the request cannot be fulfilled.

US 2020/257556 A1 discloses: Requesting computational resources for executing a program including a number of program portions includes computing sets of requests. Each set, except an initial set, is processed by a computational resource manager only if the previously submitted sets were granted. One or more additional sets are formed for processing by the manager after the initial set. A request of the additional sets includes a partial request for a program portion that is in a least-fulfilled set of program portions. Each program portion is associated with a respective fulfillment ratio of its quantity of previously requested resources divided by an associated target quantity. The partial request requests a quantity of resources that is small enough so that, after the partial request is granted, each program portion in the least-fulfilled set will have a fulfillment ratio that is greater than its fulfillment ratio had been, and is still smaller than one.

### SUMMARY

In a general aspect, a method for performing a distributed computation on a computing system using computational resources dynamically allocated using a computational resource manager includes storing information specifying quantities of computational resources associated with respective ones of a number of program portions of the program, where the program portions perform successive transformations of data and each program portion uses computational resources granted by the computational resource manager enabling computation associated with that program portion to be performed in the computing system, requesting a first quantity of computational resources associated with a first program portion of the number of program portions from the computational resource manager, receiving a second quantity of computational resources from the computational resource manager, less than the requested first quantity of computational resources, performing computation associated with the first portion of the program using the second quantity of computational resources, while performing the computation associated with the first portion of the program using the second quantity of computational resources, receiving an additional quantity of computational resources from the computational resource manager, and performing an additional computation associated with the first portion of the program using the additional quantity of computational resources while performing the computation associated with the first portion using the second quantity of computational resources.

Aspects may include one or more of the following features.

The information specifying quantities of computational resources associated with respective ones of a number of program portions of the program may include characteristics of one or more program components associated with the respective ones of the number of program portions. The characteristics may include a degree of parallelism associated with each of the one or more program components and a quantity of computational resources required for performing computation associated with each of the one or more program components. The quantity of computational resources associated with a program portion of the number of program portions may be determined based at least in part on the degree of parallelism associated with each of the one or more program components and the quantity of computational resources required for performing computation associated with each of the one or more program components.

Performing the computation associated with the first portion of the program using the second quantity of computational resources may include partitioning the first program portion into a number of sub-portions according to the received second quantity of computational resources. Performing the computation associated with the first portion of the program may include performing a first sub-portion of the number of sub-portions while one or more other sub-portions of the number of sub-portions wait to perform computation.

Partitioning of a portion of the program can be performed in a way that preserves an order of execution of at least some of the program components. Partitioning of a portion of the program portion can be performed in a way that maximizes a usage of the received computational resources while preserving an order of execution of at least some of the program components. Maximization of usage of the received computational resources can include using the received computational resources to perform computation for some but not all required instances of a program component in a first part of the program portion and associating the remaining instances of the program component with another part of the program portion for later execution.

Performing computation associated with the first portion of the program using the second quantity of computational resources may include performing computation for a first sub-portion of the plurality of sub-portions using the second quantity of computational resources while one or more other sub-portions of the plurality of sub-portions wait to perform computation. The first sub-portion may be the sub-portion among the plurality of sub-portions that is configured to use most or all of the second quantity of computational resources for execution.

Performing the computation associated with the first portion of the program using the additional quantity of computational resources may include repartitioning the first program portion into an updated number of sub-portions according to the received second quantity of computational resources and the received additional quantity of computational resources.

Performing computation associated with the first portion of the program using the additional quantity of computational resources may include performing computation associated with a first sub-portion of the updated plurality of sub-portions using the additional quantity of computational resources while one or more other sub-portions of the updated plurality of sub-portions wait to perform computation

The first sub-portion of the updated plurality of sub-portions may be the sub-portion among the updated plurality of sub-portions may be configured to use most or all of the additional quantity of computational resources for performing computation.

Partitioning the first program portion into a number of sub-portions may include partitioning the first program portion according to characteristics of one or more of program components associated with the first program portion. The characteristics of the number of program portions may include a degree of parallelism associated with each of the one or more program components and a quantity of computational resources required for performing computation associated with each of the one or more program components. A first one or more instances of a first program component may be partitioned into the first sub-portion and a second one or more instances of the first program component may be partitioned into a second sub-portion.

The method may include relinquishing the second quantity of computational resources and the additional quantity of computational resources upon completion of the computation associated with the first program portion. The method may include retaining at least some of the second quantity of computational resources and the additional quantity of computational resources upon completion of the computation associated with the first program portion. The method may include performing a computation associated with a second portion of the program using at least some of the retained computational resources.

A third quantity of the received computational resources may become unavailable during the computation associated with the first program portion and the method may further include requesting the third quantity of computational resources from the computational resource manager, receiving the third quantity of computational resources from the computational resource manager, and continuing performing computation associated with the first program portion using the received third quantity of computational resources.

The computational resource manager may be opaque regarding a quantity of computational resources available for the computing system. The method may include storing output data from the first program portion and performing computation associated with a second program portion of the number of program portions including reading and processing the stored output data. The method may include performing computation associated with a second program portion of the number of program portions including receiving and processing a stream of output data from the first program portion.

In another general aspect, a system for performing a distributed computation using computational resources of a computing system dynamically allocated using a computational resource manager includes a storage device for storing information specifying quantities of computational resources associated with respective ones of a number of program portions of the program, where the program portions perform successive transformations of data and each program portion uses computational resources granted by the computational resource manager enabling that program portion to be performed in the computing system and at least one processor configured to request a first quantity of computational resources associated with a first program portion of the number of program portions from the computational resource manager, receive a second quantity of computational resources from the computational resource manager, less than the requested first quantity of computational resources, perform computation associated with the first portion of the program using the second quantity of computational resources, while performing the computation associated with the first portion of the program using the second quantity of computational resources, receive an additional quantity of computational resources from the computational resource manager, and perform the computation associated with the first portion of the program using the additional quantity of computational resources while performing the computation associated with the first portion using the second quantity of computational resources.

In another general aspect, a system for performing a distributed computation using computational resources of a computing system dynamically allocated using a computational resource manager includes means for storing information specifying quantities of computational resources associated with respective ones of a number of program portions of the program, where the program portions perform successive transformations of data and each program portion uses computational resources granted by the computational resource manager enabling performance of computation associated with that program portion in the computing system, means for processing configured to request a first quantity of computational resources associated with a first program portion of the number of program portions from the computational resource manager, receive a second quantity of computational resources from the computational resource manager, less than the requested first quantity of computational resources, perform computation associated with the first portion of the program using the second quantity of computational resources, while performing the computation associated with the first portion of the program using the second quantity of computational resources, receive an additional quantity of computational resources from the computational resource manager, and perform the computation associated with the first portion of the program using the additional quantity of computational resources while performing the computation associated with the first portion using the second quantity of computational resources.

In another general aspect, software stored in a non-transitory form on a computer-readable medium, for performing a distributed computation using computational resources of a computing system dynamically allocated using a computational resource manager, the software including instructions for causing the computing system to store information specifying quantities of computational resources associated with respective ones of a number of program portions of the program, where the program portions perform successive transformations of data and each program portion uses computational resources granted by the computational resource manager enabling performance of computation for that program portion in the computing system, request a first quantity of computational resources associated with a first program portion of the number of program portions from the computational resource manager, receive a second quantity of computational resources from the computational resource manager, less than the requested first quantity of computational resources, performing computation associated with the first portion of the program using the second quantity of computational resources, while performing the computation associated with the first portion of the program using the second quantity of computational resources, receive an additional quantity of computational resources from the computational resource manager, perform the computation associated with the first portion of the program using the additional quantity of computational resources while performing the computation associated with the first portion using the second quantity of computational resources.

Performing computation associated with a program or a program portion can also be referred to as executing the program or program portion.

The program can be specified as a dataflow graph and the program portions can be specified as components of a dataflow graph.

The program can be specified as a procedural program specification and the program portions can be specified as subroutines.

Aspects can include one or more of the following advantages.
Among other advantages, aspects dynamically allocate computational resources to portions (e.g. components) of a computer program (e.g. data processing graph) in resource constrained computation environments, where the amount of resources available to the program portions varies over time. Portions of programs (sometimes referred to as "phases") are enabled to partially perform computation with less than all their required computational resources and are enabled to incorporate additional computational resources while performing computation as they become available such as to complete computation. Program portions are advantageously less likely to be stalled while waiting for all their required resources to be granted. Program portions are advantageously able to recover from resource (e.g., node) failures in the computing system by dynamically allocating new resources to replace failed resources.

Other features and advantages of the invention will become apparent from the following description, and from the claims.

### DESCRIPTION OF DRAWINGS

FIG. 1 is a block diagram of a system for dynamic allocation of distributed computational resources.
FIG. 2a is a detailed block diagram of the system for dynamic allocation of distributed computational resources.
FIG. 2b is diagram of an example of a data processing graph.
FIG. 3 is a flowchart of a dynamic computational resource allocation process.
FIG. 4 shows the resource requesting module requesting and receiving computational resources for a first phase of the data processing graph of FIG. 2b.
FIG. 5 shows the first phase of the data processing graph of FIG. 2b executing using computational resources of the execution module.
FIG. 6 shows execution of the first phase of the data processing graph of FIG. 2b completing.
FIG. 7 shows the resource requesting module requesting computational resources for a second phase of the data processing graph of FIG. 2b and receiving fewer than the requested amount of computational resources.
FIG. 8 shows the second phase of the data processing graph of FIG. 2b being partitioned.
FIG. 9 shows additional computational resources becoming available while part of the second phase is executing.
FIG. 10 shows the second phase of the data processing graph of FIG. 2b being repartitioned based on additional computational resources becoming available.
FIG. 11 shows a first part of the second phase of the data processing graph of FIG. 2b completing.
FIG. 12 shows a second part of the second phase of the data processing graph of FIG. 2b executing on previously received computational resources.
FIG. 13 shows the second part of the second phase of the data processing graph of FIG. 2b completing.
FIG. 14 shows a first part of a third phase of the data processing graph of FIG. 2b executing on previously received computational resources and additional computational resources being requested and received.
FIG. 15 shows a second part of the third phase of the data processing graph of FIG. 2b executing.
FIG. 16 shows a second host of the execution module failing.
FIG. 17 shows computational resources for the second part of the third phase of the data processing graph of FIG. 2b being requested and received on a new host of the execution module.
FIG. 18 shows the second part of the third phase of the data processing graph of FIG. 2b executing.
FIG. 19 shows the third phase of the data processing graph of FIG. 2b completing execution.

### DESCRIPTION

### 1 System Overview

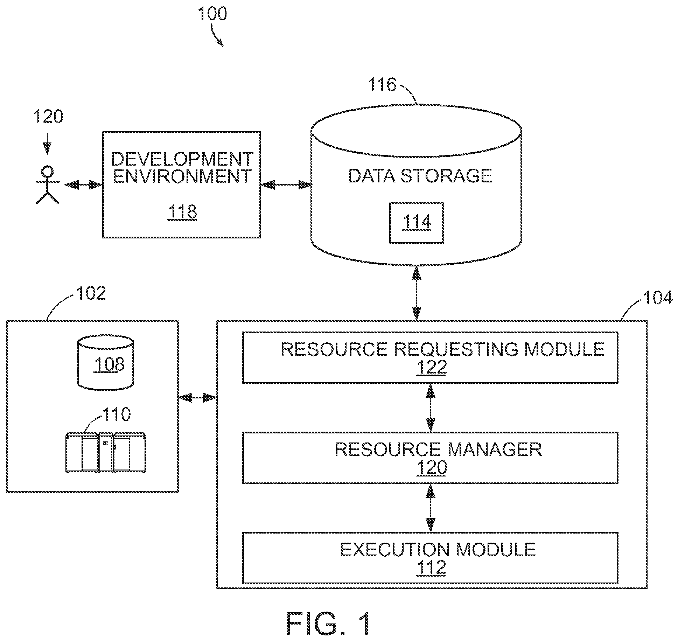

FIG. 1 shows an example of a data processing system 100 in which a resource allocation technique is used. The system 100 includes a data source 102 that may include one or more sources of data such as storage devices or connections to online data streams, each of which may store or provide data in any of a variety of formats (e.g., database tables, spreadsheet files, flat text files, or a native format used by a mainframe). An execution environment 104 includes an execution module 112, a resource manager 120, and a resource requesting module 122. The execution environment 104 may be hosted, for example, on one or more general-purpose computers under the control of a suitable operating system, such as a version of the UNIX operating system. For example, the execution environment 104 can include a multiple-node parallel computing environment including a configuration of computer systems using multiple central processing units (CPUs) or processor cores, either local (e.g., multiprocessor systems such as symmetric multi-processing (SMP) computers), or locally distributed (e.g., multiple processors coupled as clusters or massively parallel processing (MPP) systems, or remote, or remotely distributed (e.g., multiple processors coupled via a local area network (LAN) and/or wide-area network (WAN)), or any combination thereof.

A data storage system 116 is accessible to the execution environment 104 and to a development environment 118. The development environment 118 is a system for developing programs that can be configured in a variety of ways such that different interrelated program portions are associated with different target quantities of computational resources to be allocated for use at runtime. In some implementations, these programs are data processing programs that process data during runtime, such as data received from the data source 102. One example of a data processing program is a data processing graph that includes vertices (representing data processing components or datasets) connected by directed links (representing flows of work elements, i.e., data) between the vertices. Other forms of data processing programs are possible in accordance with the present invention. In addition to these data flow connections, some data processing graphs also have control flow connections for determining flow of control among components. In such data processing graphs, the program portions are the components and they are interrelated according to their data flow links. In other examples, the program portions are sub-modules or other entities within a program that are separately granted computing resources for being executed. The program portions are considered interrelated to the extent that the ability of the overall program to which they belong to be executed depends on the abilities of the individual program portions. Such interrelated or interdependent program portions may also be dependent on each other for execution. For example, one program portion may receive data from or provide data to another program portion. Also, while the program portions are separately granted computing resources, they may overlap or be interdependent in various other ways (e.g., competing for a limited supply of computing resources).

For example, such an environment for developing graph-based computations is described in more detail in U.S. Publication No. 2007/0011668, titled "Managing Parameters for Graph-Based Applications". A system for executing such graph-based computations is described in U.S. Patent 5,966,072, titled "EXECUTING COMPUTATIONS EXPRESSED AS GRAPHS". Data processing graphs made in accordance with this system provide methods for getting information into and out of individual processes represented by graph components, for moving information between the processes, and for defining a running order for the processes. This system includes algorithms that choose interprocess communication methods from any available methods (for example, communication paths according to the links of the graph can use TCP/IP or UNIX domain sockets or use shared memory to pass data between the processes).

The execution module 112 processes data from the data source 102 according to one or more data processing graphs 114, using computational resources allocated by the resource manager 120, to generate output data which is stored back in the data source 102 or in the data storage system 116, or otherwise used. Storage devices providing the data source 102 may be local to the execution environment 104, for example, being stored on a storage medium connected to a computer hosting the execution environment 104 (e.g., hard drive 108), or may be remote to the execution environment 104, for example, being hosted on a remote system (e.g., mainframe 110) in communication with a computer hosting the execution environment 104, over a remote connection (e.g., provided by a cloud computing infrastructure). In some examples, the data source 102, includes different forms of database systems including data that may be organized as records having values for respective fields (also called "attributes" or "columns"), including possibly null values.

The resource manager 120 schedules execution of one or more computer programs, such as the data processing graphs 114, on the execution environment 104 and manages allocation of the execution environment's resources to the data processing graphs. As is described in greater detail below, for computer programs that include interrelated program portions, such as data processing graphs that include a number of interdependent components, the resource requesting module 122 interacts with the resource manager 120 to dynamically allocate computational resources based on availability of computational resources associated with the execution module 112, which may vary over time.

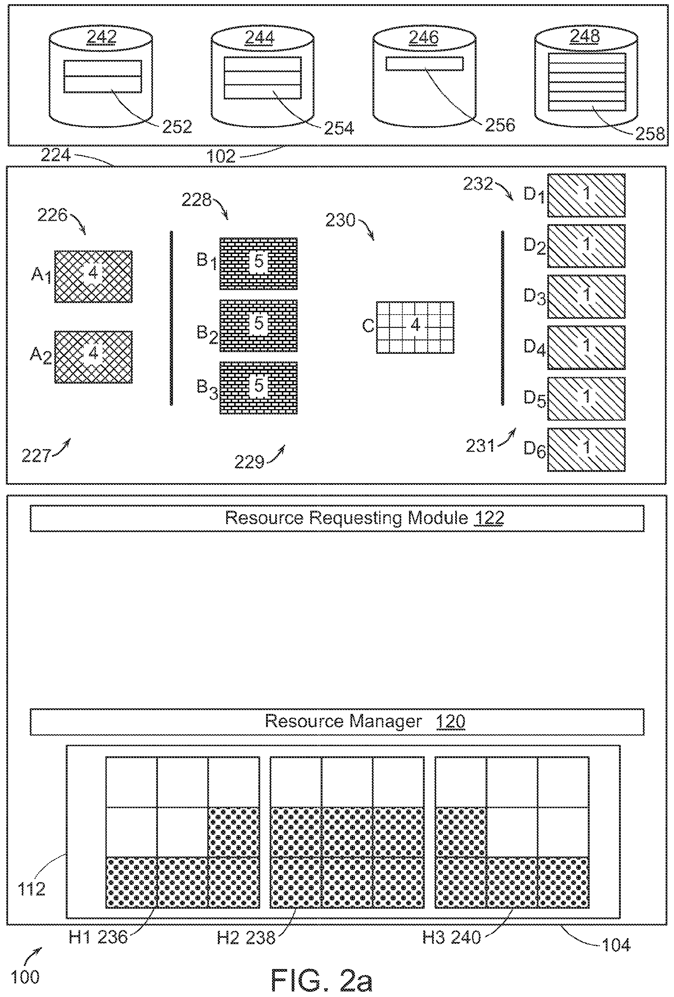

Referring to FIG. 2A, an alternative representation of the data processing system 100 includes the execution environment 104, the data source 102, and a data processing program 224 (e.g., a data processing graph), for processing data from the data source 102 using computational resources of the execution environment 104.

The execution environment 104 includes the resource requesting module 122, the resource manager 120, and the execution module 112. Among other features, the execution module 112 includes computational resources which may be distributed across multiple hosts (e.g., computing clusters of servers). In FIG. 2A, there are three hosts: a first host H1 236, a second host, H2 238, and a third host, H3 240. Each host includes a finite amount of computational resources which taken together include the total computational resources of the execution module 112. Examples of the computational resources being managed and allocated by the resource manager 120 may include any of: a usage share of a host's processor (e.g., specified as virtual cores that map to physical cores of one or more multi-core processors), a portion of volatile memory of a host (e.g., specified a quantity of the host's main memory space), a portion of non-volatile memory of a host (e.g., specified as a quantity of the host's hard disk drive storage space), or a usage share of a communication channel (e.g., a fraction of the bandwidth of a host's Ethernet interface). A single unit of computational resources may include multiple types of resources, such as a specified number of CPUs or virtual cores and a specified amount of main memory.

In FIG. 2A, for the sake of simplifying the explanation of the computational resource allocation approaches described herein, the computational resources of the hosts are represented as computational resource units (illustrated as squares within the hosts), which are all shown as having the same granularity (i.e., the smallest size that can be granted). However, it is noted that the computational resources are not necessarily segmented into units with a fixed and equal granularity but can instead be segmented into units of various granularities or portioned using other, alternative approaches. Furthermore, for the sake of simplifying the explanation of the computational resource allocation approaches described herein, all of the hosts in the execution module 112 of FIG. 2A are shown as having the same number (i.e., 9) of computational resource units. However, it is noted that, in general, different hosts may have different amounts of computational resources.

The resource manager 120 receives requests for computational resources and either grants or denies the requests based on an amount of available computational resources in the hosts of the execution module 112. One example of such a resource manager 120 includes the "Hadoop YARN" resource manager which is capable of receiving a request for computational resources for executing a computer program (or program portion) and, if sufficient computational resources are available, grants a 'container' with some number of units of the computational resources for use by the program, where a container can be implemented as any suitable data structure for containing a particular quantity of computational resources, or containing any information that identifies a particular quantity of computational resources, or any combination thereof. The computer program may then execute using the computational resources in the granted container. In some examples, the computer program can request multiple containers of resources at one time (e.g., a number of containers for running concurrent instances of a portion of the program) from the resource manager 120. If sufficient resources are available for the resource manager 120 to grant all of the requested multiple containers to the computer program, it will do so. Otherwise, based on the available resources, the resource manager 120 may grant only some of the requested containers (i.e., an integer number of containers less than the total number of containers requested), or the resource manager 120 may not grant any of the requested containers. In some implementations, all of the computational resources associated with a given container are derived from a single host. Alternatively, in other implementations, a given container's resources may be derived from multiple hosts.

As is described in greater detail below, the resource requesting module 122 interacts with the resource manager 120 in a way that allows for dynamic allocation (e.g., incremental allocation, deallocation, or reallocation) of resources for the data processing program 224 as resource availability in the execution module 112 changes over time.

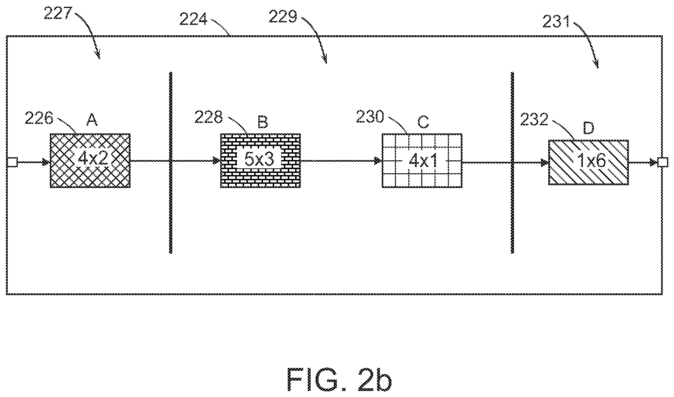

The data processing program 224 is a specification of the computer program for processing data received from the data source 102. FIG. 2B is an example of a data-processing graph-based specification of the data processing program 224, which includes a number of interrelated components including a first component, A 226, a second component, B 228, a third component, C 230, and a fourth component, D 232.

In some examples, the execution of the data processing program (e.g., the data processing graph) is broken into multiple, sequential computation phases (sometimes referred to as "program portions"), where each program component of the computer program (e.g. a node or component of the graph or a subroutine of a procedural program) belongs to one of the computation phases. In general, all program components belonging to a computation phase must complete their processing before the program components belonging to a next, subsequent computation phase can begin their processing. For example, the data processing program 224 in FIG. 2 is a data processing graph that includes three computation phases: a first computation phase 227, a second computation phase 229, and a third computation phase 231. The first component, A 226 belongs to the first computation phase 227, the second component, B 228 and the third component, C 230 both belong to the second computation phase 229, and the fourth component, D 232 belongs to the third computation phase 231.

Furthermore, each program component of a computer program may be associated with a computational resource quantity that specifies a quantity of resources required for the program component to on the execution module 112 and a 'layout' constraint that specifies a degree of parallelization of the program component. A shorthand notation for the computational resource quantity and the layout for a component is "AxB," where A is the computational resource quantity and B the layout constraint. In the example data processing graph of FIG. 2B, the first component, A 226 is annotated with "4x2" because it has a computational resource quantity of "4" resource units and a layout constraint of "2" specifying that two instances (or plys) of the component run in parallel. The second component, B 228 is annotated with "5x3" because it has a computational resource quantity of "5" resource units and a layout constraint of "3" specifying that three instances of the component run in parallel. The third component, C 230 is annotated with "4x1" because it has a computational resource quantity of "4" resource units and a layout constraint of "1" specifying that only one instance of the component runs. The fourth component, D 232 is annotated with "1x6" because it has a computational resource quantity of "1" resource unit and a layout constraint "6" specifying that six instances of the component run in parallel.

Referring again to FIG. 2A, each of the program components in the data processing program 224 is configured to process data elements (e.g., blocks, files, or records) from datasets in the data source 102. In FIG. 2A, the first program component, A 226 processes first data elements 252 from a first dataset 242, the second program component, B 228 processes second data elements 254 from a second dataset 244, the third program component, C 230 processes third data elements 256 from a third dataset 246 and the fourth program component, D 232 processes fourth data elements 258 from a fourth dataset 248. In some examples, a block is a portion of data in a file that includes one or more records. In the examples described herein, each block of data elements in a dataset is processed by a corresponding instance of a program component that is associated with the dataset. However, it is noted that other allocations of data to instances of program components are possible. For example, the datasets associated with each program component may be analyzed to determine a target number of instances for different program components, and consequently a target quantity of computational resources, based on the number of data elements. In other examples, a target quantity of computational resources is not necessarily based on a quantity of data in an associated dataset but may instead (or also) depend on other factors, such as historical or estimated performance data. It is noted that there is no requirement that each program component is associated with a different dataset. For example, a number of program components may all process data from one or more of the same dataset(s).

### 2 Dynamic Resource Allocation

In scenarios where resources are plentiful, the resource requesting module 122 is able to allocate resources for the phases of the data processing program 224 without issue. Each phase uses its allocated resources to and generate results, which may be used by subsequent phases in the data processing program. Upon completion of a phase, its allocated computational resources are relinquished. However, in some examples, the execution module 112 has limited computational resources, which can result in the resource requesting module 122 receiving less than all of the computational resources that it requests for a phase. In such examples, rather than waiting to execute the phase until the remainder of the resources for the phase become available, aspects described herein use a dynamic resource allocation process that executes part of the phase with the resources that are already allocated and executes additional parts of the phase as additional computational resources become available.

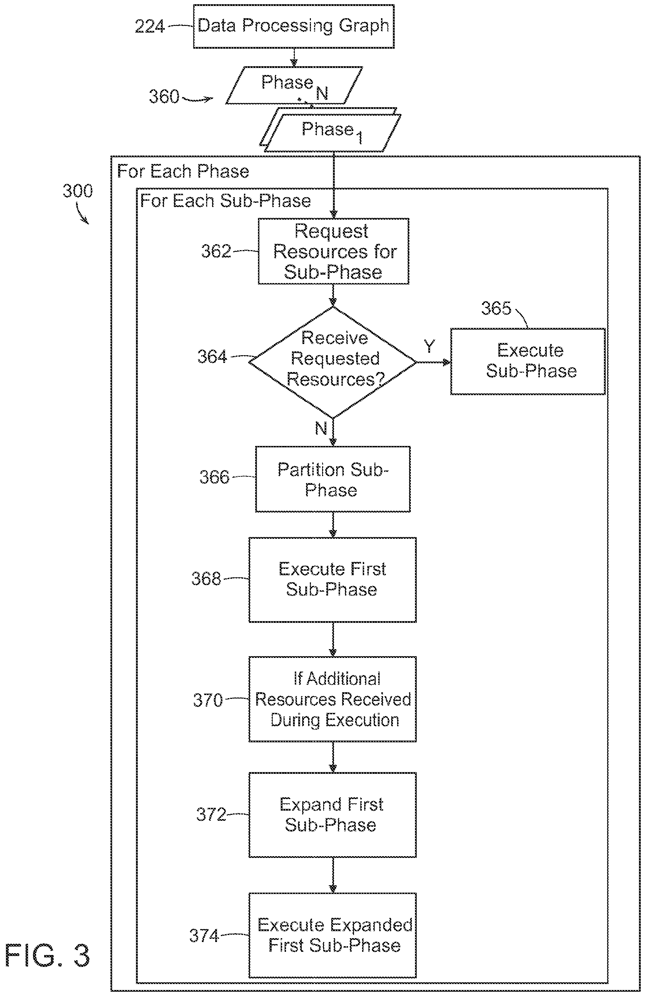

Referring to FIG. 3, a resource allocation process 300 dynamically allocates computational resources for executing the data processing program 224 when the execution module 112 has limited computational resources. The process 300 receives representations of a number of phases 360, where each representation includes information related to the program components in the phase (e.g., computational resource requirements and a degree of parallelism for the program components). To facilitate explanation of the process 300, each representation of a phase 360 is considered as starting with a single sub-phase that includes all the program components of the phase. For each representation of a phase 360, for each sub-phase in the phase 360, a first step 362 of the process 300 requests all the computational resources required for the sub-phase to execute. In a second step 364 of the process 300, if all the requested computational resources for sub-phase are received (alternatively referred to as "allocated" or "granted"), then a third step 365 executes the sub-phase using the received computational resources. Otherwise, if fewer than all the requested computational resources are received, a fourth step 366 of the process 300 partitions the sub-phase into two (or in some examples multiple) sub-phases: a first sub-phase and a second sub-phase.

For each sub-phase, a fifth step 368 of the process 300 executes the first sub-phase using the received computational resources, while the second sub-phase waits for resources to become available. In a sixth step 370 of the process 300, if additional resources become available during execution of the sub-phase, then a seventh step 372 of the process 300 expands the first sub-phase (and shrinks the second sub-phase) such that the first sub-phase is able to use the additional received computational resources (e.g., by adding instances of components from the second sub-phase to the first sub-phase). In an eighth step 374 of the process 300, the expanded first sub-phase executes.

Upon completion of execution of each sub-phase (or expanded sub-phase), the results of the execution are stored (e.g., in memory or on disk). The process 300 iterates through each sub-phase (e.g., the added second sub-phase), where each sub-phase reads any results stored by the previous sub-phase and executes using the allocated computational resources, as is described above until all sub-phases in the phase have executed. The process repeats for each phase.

### 3 Phase Partitioning

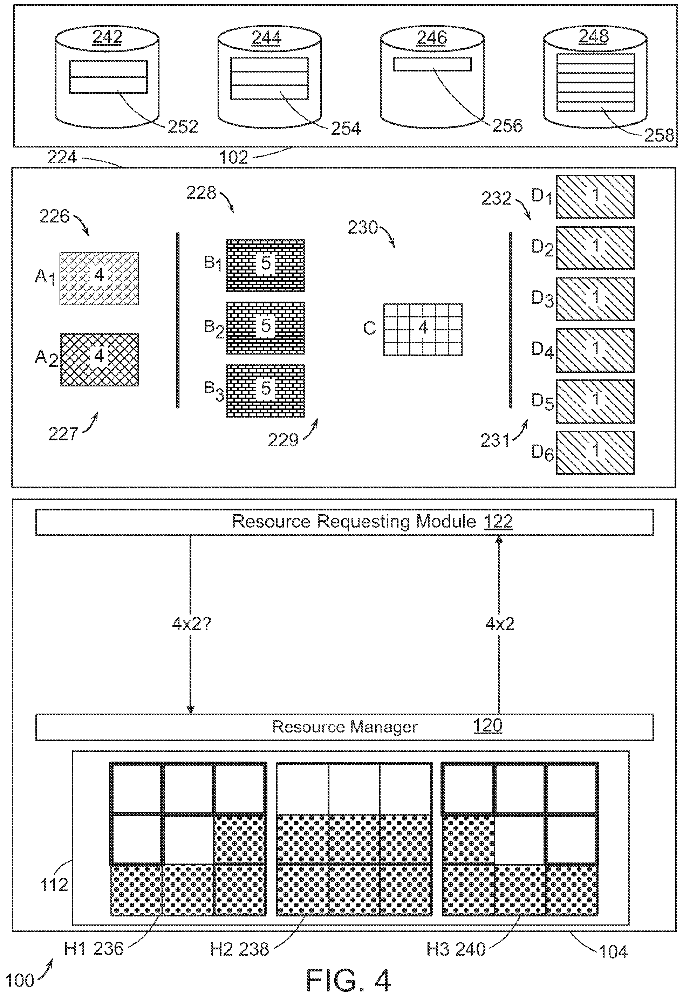

Referring to FIG. 4, in an exemplary application of the process 300 of FIG. 3 to the data processing program 224 of FIG. 2B (i.e., a data processing graph), the first step 362 of the process 300 begins by the resource requesting module 122 requesting all the resources required to execute the single sub-phase of the first phase 227 of the data processing program 224. In this case, the single sub-phase of the first phase 227 requires "8" computational resource units because it includes "2" instances of the first program component, A 226, which requires "4" computational resource units per instance to execute. The "4x2" request is sent to the resource manager 120, which responds to the resource requesting module 112 by granting the requested "4x2" computational resource units for the single sub-phase of the first phase 227. The granted computational resource units are shown with bold outlines in the execution module 112, with four computational resource units granted on the first host, H1 236 and four computational resource units granted on the third host, H3 240.

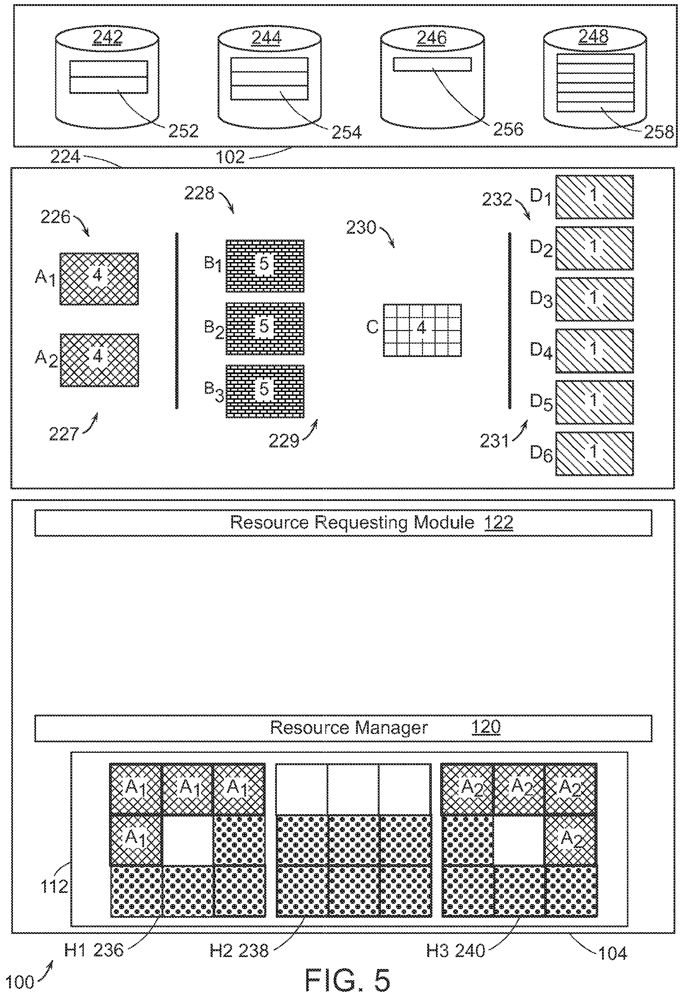

Referring to FIG. 5, the second step 364 of the process 300 determines that all the requested computational resources were received and the process 300 therefore proceeds to the third step 365. The third step 365 executes the single sub-phase of the first phase 227 including the two instances of the first program component, A 226 using the granted computational resource units, with the first instance of the first program component, A 226 (i.e., A₁) executing on the first host, H1 236 and the second instance of the first program component, A 226 (i.e., A₂) executing on the third host, H3 240. Note that in the example of FIG. 5, an instance of a program component is required to use only computational resource units belonging to a single host when executing. However, in other examples, an instance of a program component may execute using computational resource units belonging to multiple hosts.

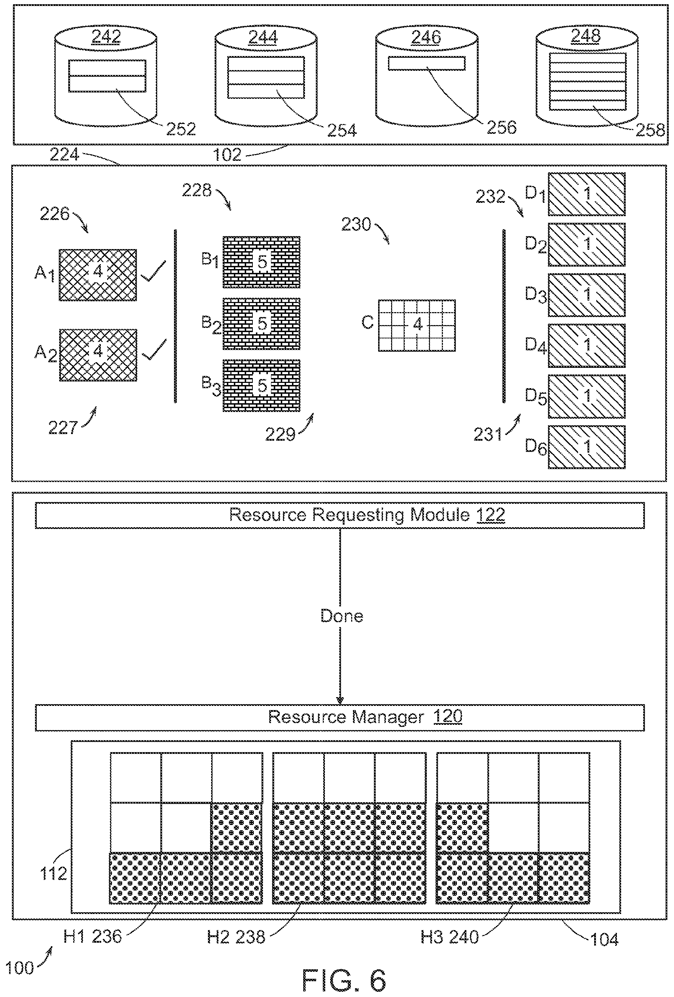

Referring to FIG. 6, when execution of the two instances of the first program component A, 226 using the received computational resource units is complete and the results of the execution are stored, the resource requesting module 122 sends a "Done" message to the resource manager 120 indicating that execution is complete. The resource requesting module 122 marks the instances of the first program component, A 226 as complete (shown as checkmarks in the figure). With the two instances of the first program component A, 226 finished executing, the single sub-phase of the first phase 227 is complete and the granted computational resources are relinquished.

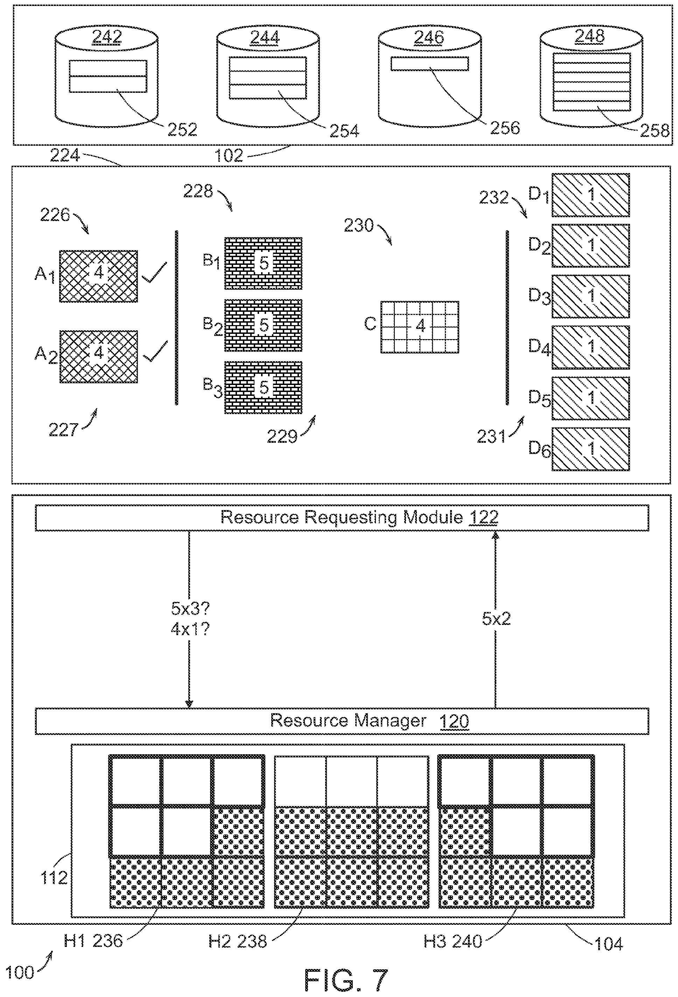

Referring to FIG. 7, the process 300 moves on to the second phase 229 of the data processing graph 224. The first step 362 of the process 300 commences by the resource requesting module 122 requesting all the computational resources required to execute the single sub-phase of the second phase 229. In this case, the single sub-phase of the second phase 229 requires "19" computational resource units because it includes "3" instances of the second program component, B 228, which requires "5" computational resource units per instance to execute and "1" instance of the third program component, C 230, which requires "4" computational resource units per instance to execute. The "5x3" and "4x1" computational resource requests are sent to the resource manager 120, which responds to the resource requesting module 112 by granting "5x2" computational resource units. The granted computational resource units are shown with bold outlines in the execution module 112, with five computational resource units granted on the first host, H1 236 and five computational resource units granted on the third host, H3 240.

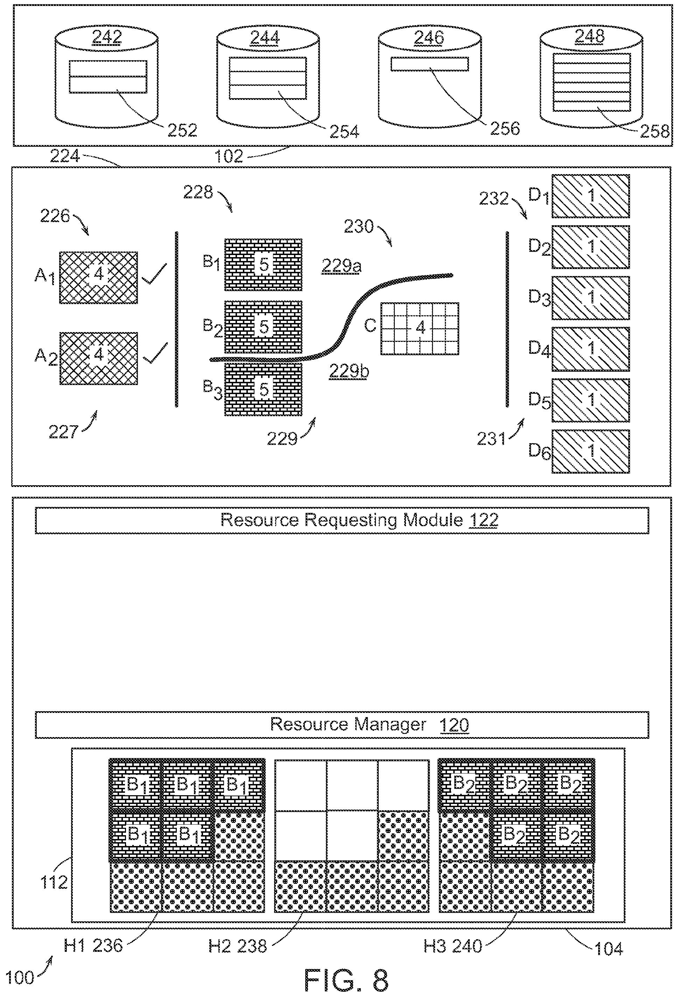

Referring to FIG. 8, the second step 364 of the process 300 determines that less than all the requested computational resource units for the single sub-phase of the second phase 229 were granted. The process 300 therefore proceeds to the fourth step 366 which partitions the single sub-phase of the second phase 229 into two sub-phases: a first sub-phase 229a and a second sub-phase 229b. In general, the partitioning of a sub-phase accounts for the order of execution of the program components in the data processing program. For example, the second program component, B 228 of the data processing program 224 is specified as executing before the third program component, C 230, so the partitioning of the second phase 229 is performed in a way that ensures all instances of the second program component, B 228 are allocated resources before the third program component, C 238 is allocated resources. In the example of FIG. 8, only "5x2" computational resource units are granted, so only two instances of the second program component, B 228 are included in the first sub-phase 229a. There aren't sufficient granted computational resources for executing the remaining instances of the second program component, B 228 and the third program component, C 228 in the second phase 229, so those instances are included in the second sub-phase 229b.

That is, the first sub-phase 229a includes a first instance of the second program component, B 228 (i.e., B₁) and a second instance of the second program component, B 228 (i.e., B₂). The first and second instances of the second program component 228 require "5" computational resource units each to execute and can therefore be executed using the with five computational resource units granted on the first host, H1 236 and five computational resource units granted on the third host, H3 240. In the fifth step 368 of the process 300, the first and second instances (B₁, B₂) of the second program component 228 begin executing using the with five computational resource units granted on the first host, H1 236 and five computational resource units granted on the third host, H3 240.

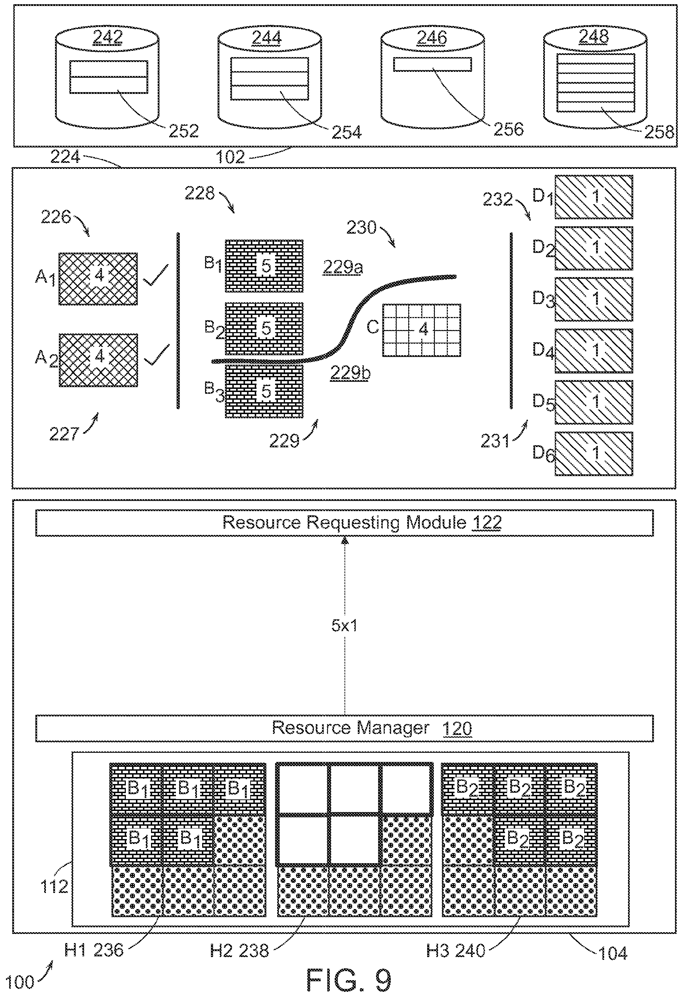

Referring to FIG. 9, at the sixth step 370 of the process 300, while the first sub-phase 229a is executing, the resource manager 120 sends a message to the resource requesting module 122 indicating that another "5" computational resource units have become available on the second host, H2 238. The newly granted computational resource units are shown with bold outlines in the execution module 112, with five computational resource units granted on the second host, H2 238.

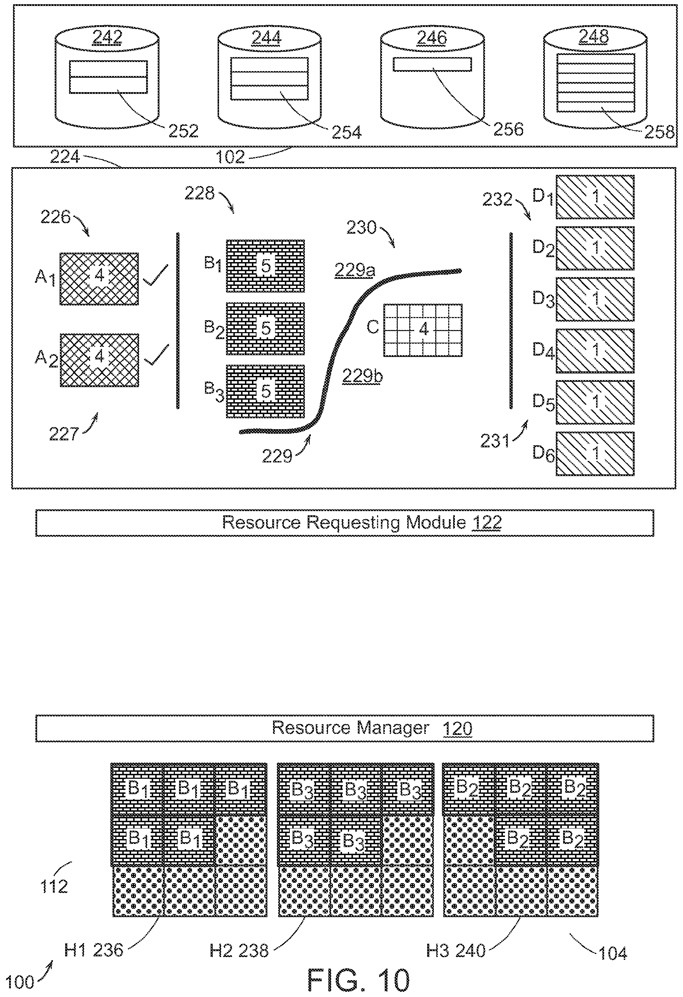

Referring to FIG. 10, the process 300 proceeds to the seventh step 372 and expands the first sub-phase 229a to include the third instance of the second program component 228 (i.e., B₃), which can use the newly granted "5" computational resource units to execute. The system may try to complete all instances of a program component (B) before involving instances of other program components (C) to make the results the program component (B) available or the system may always try to make use of all available resources for execution, so that B3 is chosen instead of C in Fig. 10. The eighth step 374 of the process begins execution of the expanded first sub-phase 229a by executing the third instance (B₃) of the second program component on the second host, H2 238.

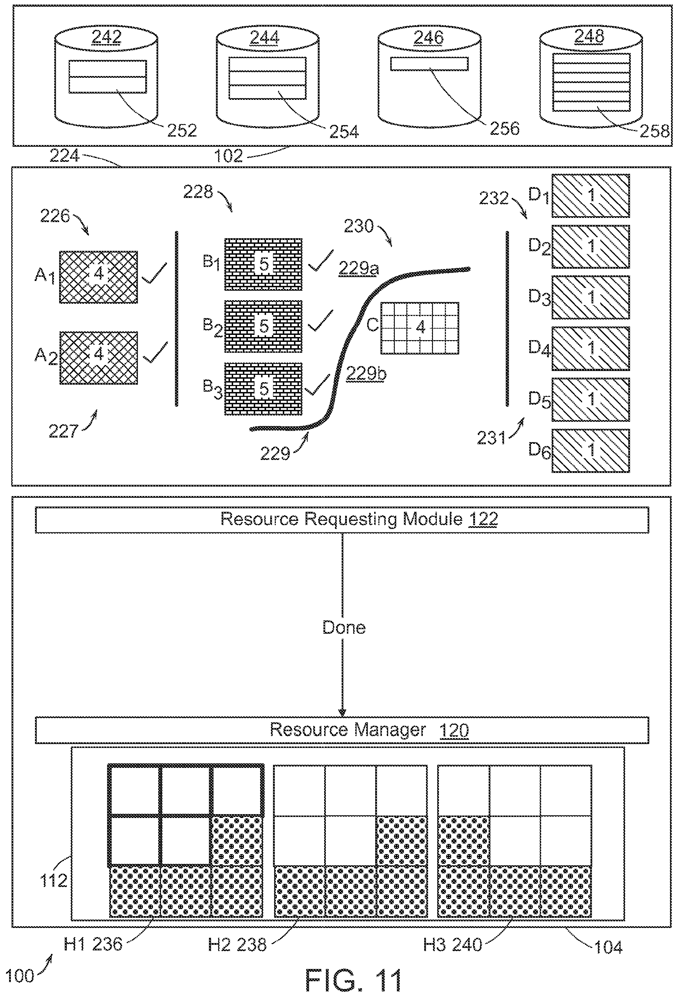

Referring to FIG. 11, when execution of the three instances of the second program component, B 228 using the received computational resource units is complete and the results of the execution are stored, the resource requesting module 122 sends a "Done" message to the resource manager 120 indicating that execution is complete. The resource requesting module 122 marks the instances of the second program component, B 228 as complete (shown as checkmarks in the figure). With the three instances of the second program component, B 228 finished executing, the first sub-phase 229a is complete.

In some examples, upon completion of execution of a phase or sub-phase, all the received computational resources are relinquished. In other examples, at least some of the granted computational resources are retained for execution of instances of program components in subsequent phases, preferably without requiring the module 122 to send a request for resources to manager 120. For example, in FIG. 11, "5" computational resource units belonging to the first host, H1 236 are retained for execution of the instance of the third program component, C 230 in the second sub-phase 229b, which requires "4" computational resource units to execute.

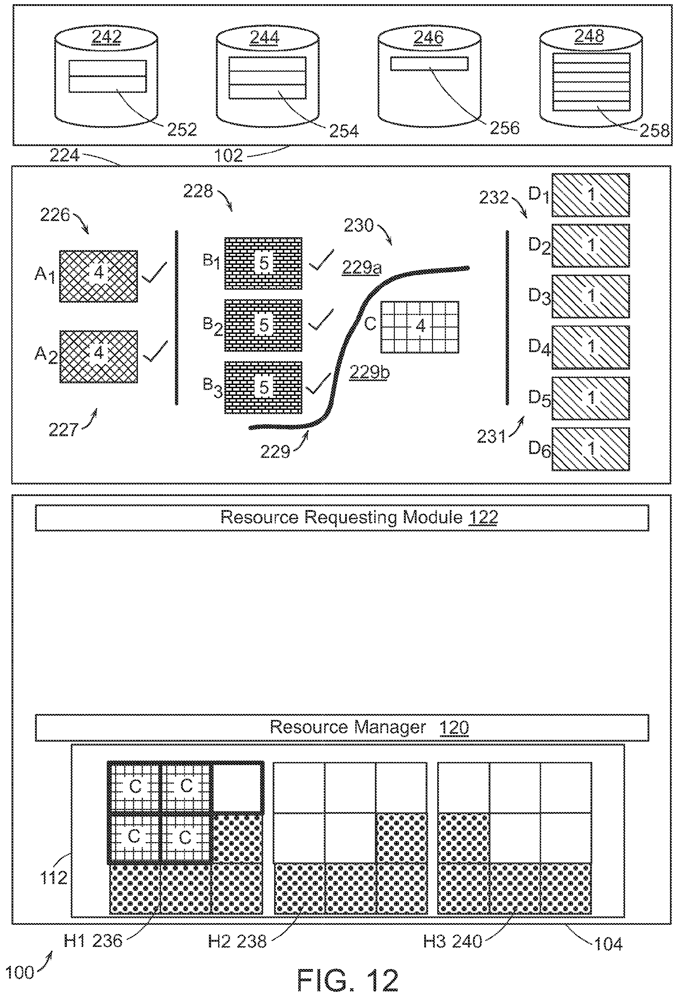

Referring to FIG. 12, after completion of the first sub-phase 229a, the process 300 begins execution of the second sub-phase 229b by executing the instance of the third program component, C 230 on the retained computational resource units from the first host, H1 236. No resources need to be requested by step 362 and the second sub-phase 229b is executed at step 365. Note that in the example of FIG. 12, only four of the five retained computational resource units on the first host, H1 236 are utilized. This is due to the fact that some systems grant computational resources as "blocks" or "containers" that are treated as a single indivisible unit that must be retained or relinquished as a whole. As a consequence, re-use of computational resources may require balancing of the benefit of re-using resources and the potential waste caused by re-use of the resources.

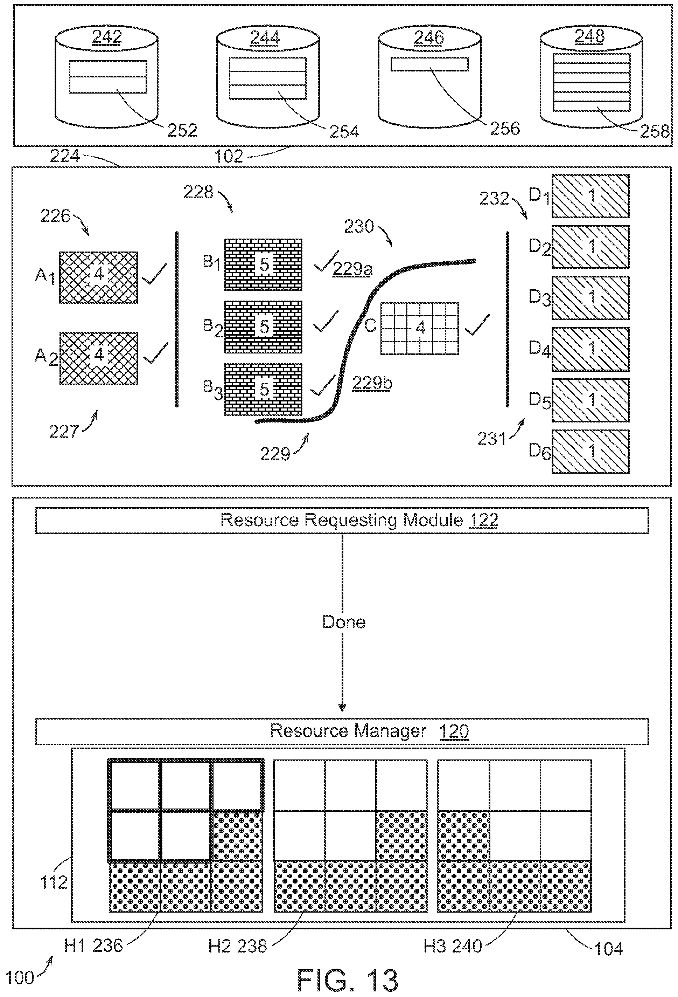

Referring to FIG. 13, when execution of the instance of the third program component, C 230 using the granted computational resource units is complete and the results of the execution are stored, the resource requesting module 122 sends a "Done" message back to the resource manager 120 indicating that execution is complete. The resource requesting module 122 marks the instance of the third program component, C 230 as complete (shown as a checkmark in the figure). With the instance of the third program component, C 230 finished executing, the second sub-phase 229b (and the second phase 229) is complete. Once again, the granted computational resources on the first host, H1 236 are retained for execution of instances of program components in the next phase.

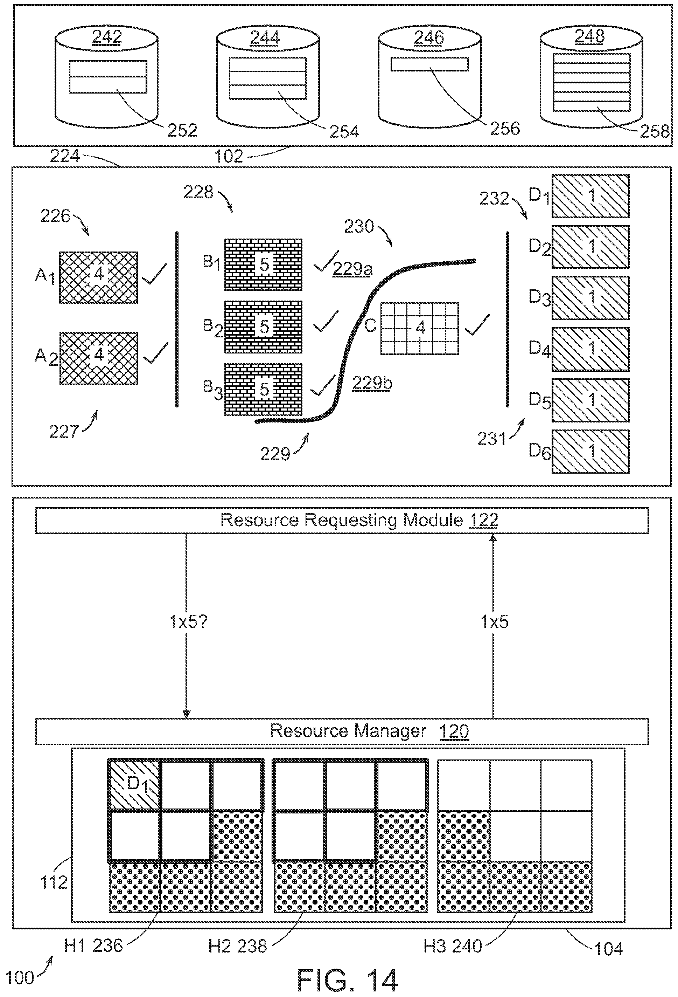

Referring to FIG. 14, after completion of the second phase 229, the process 300 begins execution of the third phase 231 by executing a first instance, D₁ of the fourth program component, D 232 on the computational resource units that were retained on the first host, H1 236. Here, only one of the five retained computational resource units on the first host, H1 236 are utilized because D₁ only requires "1" computational resource unit to execute. In general, only one instance of a program component may execute in a container of resources.

In the first step 362 of the process 300, the resource requesting module 122 requests the computational resources required to execute the single sub-phase of the third phase 331. In this case, the single sub-phase of the third phase 231 requires "6" computational resource units because it includes "6" instances of the fourth program component, D 232, which requires "1" computational resource unit per instance to execute. However, the first instance, D₁ of the fourth program component, D 232 is assigned to the retained computational resources on the first host, H1 236, so a "1x5" computational resource request is sent to the resource manager 120 for the remaining five instances of the fourth program component, D 232. The resource manager 120 responds to the resource requesting module 112 by granting the "1x5" computational resource units. The granted computational resource units are shown with bold outlines in the execution module 112, with five computational resource units granted on the second host, H2 238.

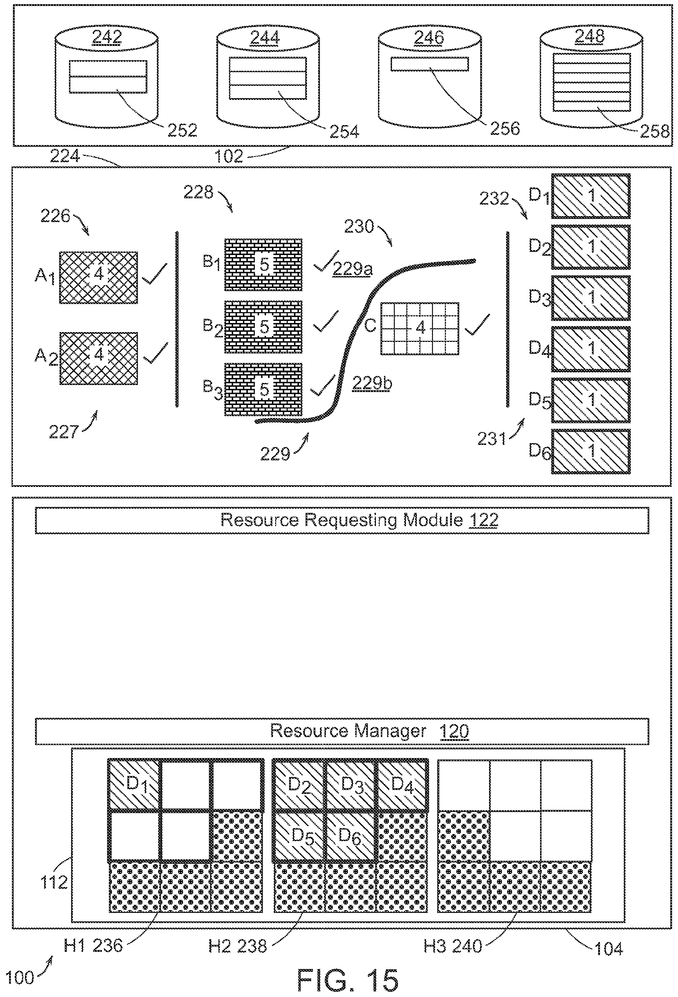

Referring to FIG. 15, the second step 364 of the process 300 determines that all the requested computational resources were received for the single sub-phase and the process 300 therefore proceeds to the third step 365. The third step 365 begins executing the remaining five instances of the fourth program component, D 232 of the single sub-phase of the third phase 231 using the granted computational resource units, with all five instances of the fourth program component (i.e., D₂-D₆) executing on the second host, H2 238.

### 4 Rollback

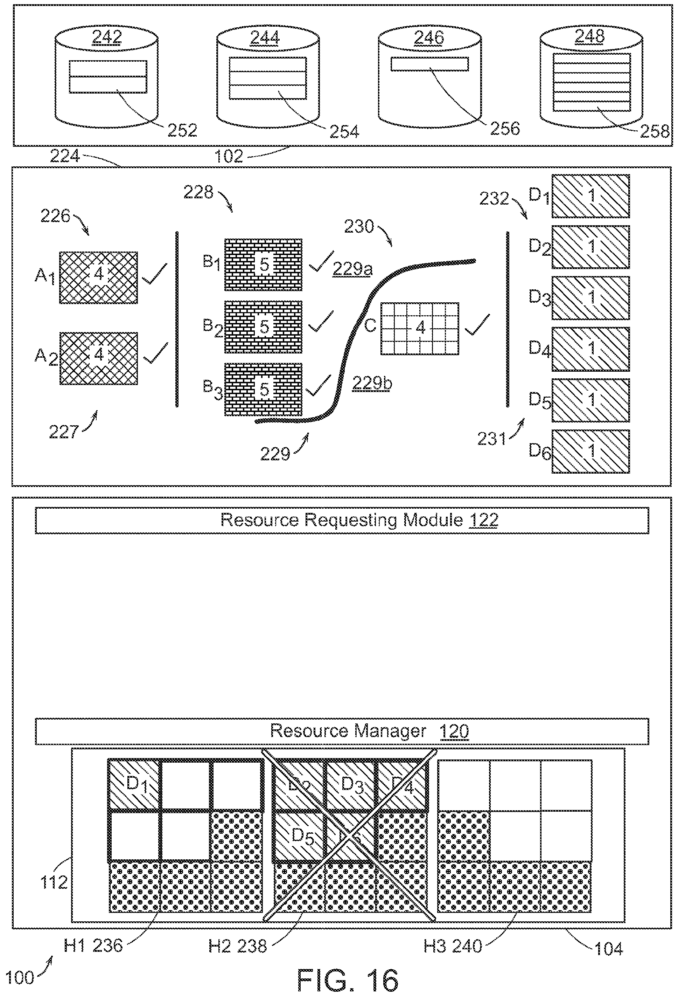

In some examples, a host that is executing instances of program components may experience a failure during execution. Referring to FIG. 16, the second host, H2 238 that is executing five instances of the fourth program component (i.e., D₂-D₆) experiences a failure, while the first host, H1 234 continues executing the first instance, D₁ of the fourth program component.

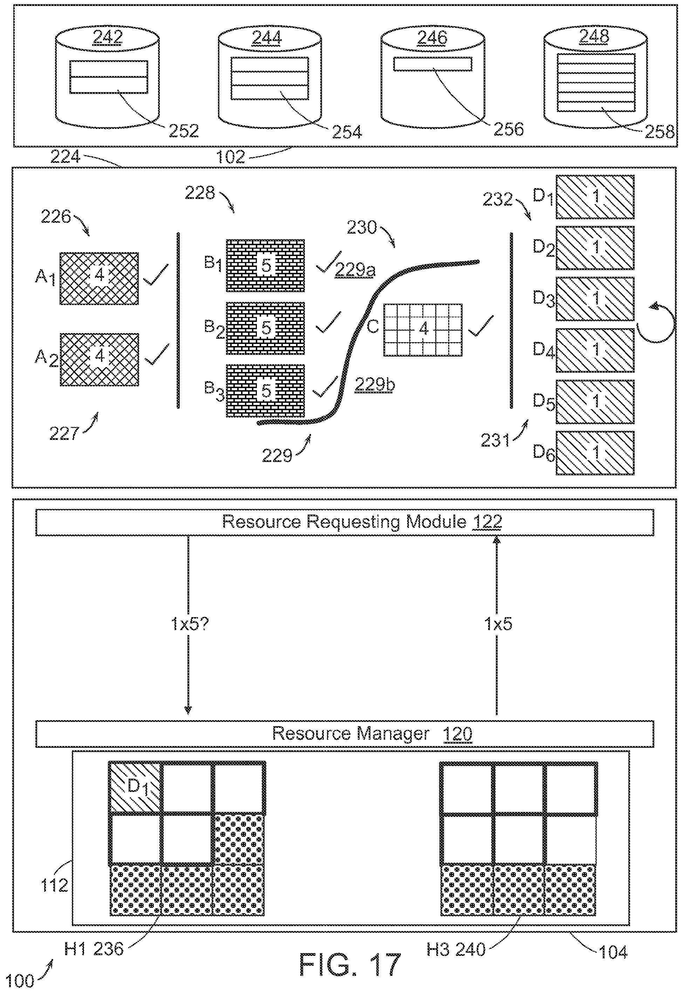

Referring to FIG. 17, to recover from the failure of the second host, H2 238, the process 300 rolls back execution of all instances of program components in the third phase 231 to an initial state of the phase (e.g., a state stored at completion of the second phase 229). In some examples, the execution steps 365, 368 of the process 300 include a step (not shown) that detects whether computational resources have been revoked or have otherwise become unavailable and rolls back execution. After execution has been rolled back, the resource requesting module 122 sends a "1x5" computational resource request to the resource manager 120 for the five instances of the fourth program component, D 232 that were executing on the second host, H2 238. The resource manager 120 responds to the resource requesting module 112 by granting the "1x5" computational resource units on the third host, H3 240. The granted computational resource units are shown with bold outlines in the execution module 112.

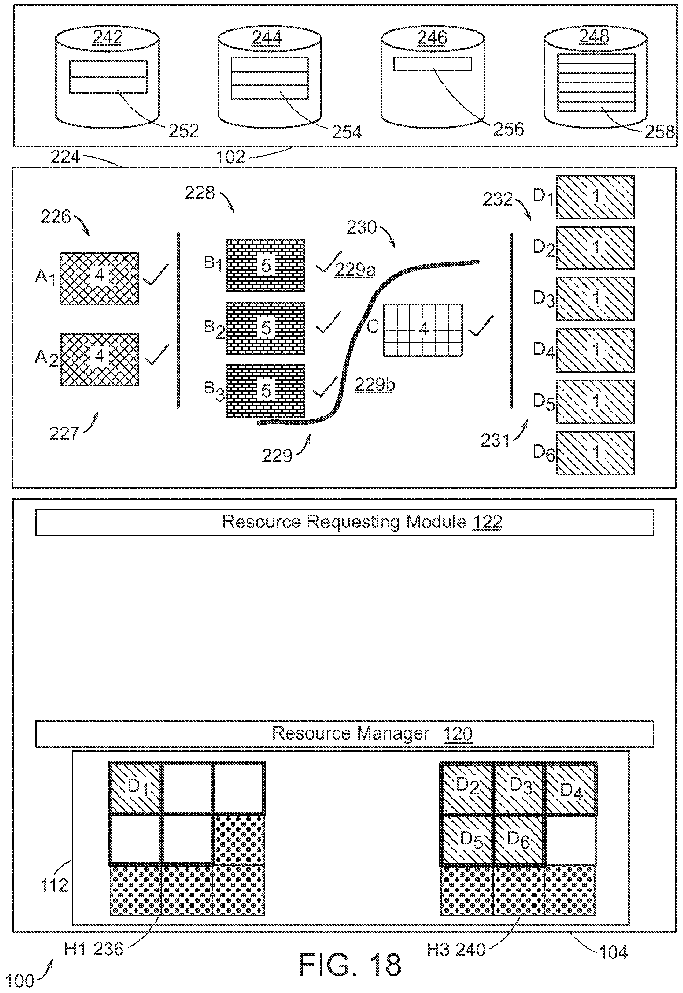

Referring to FIG. 18, the five instances (D₂-D₆) of the fourth program component, D 232 begin executing using the granted computational resource units on the third host, H2 240.

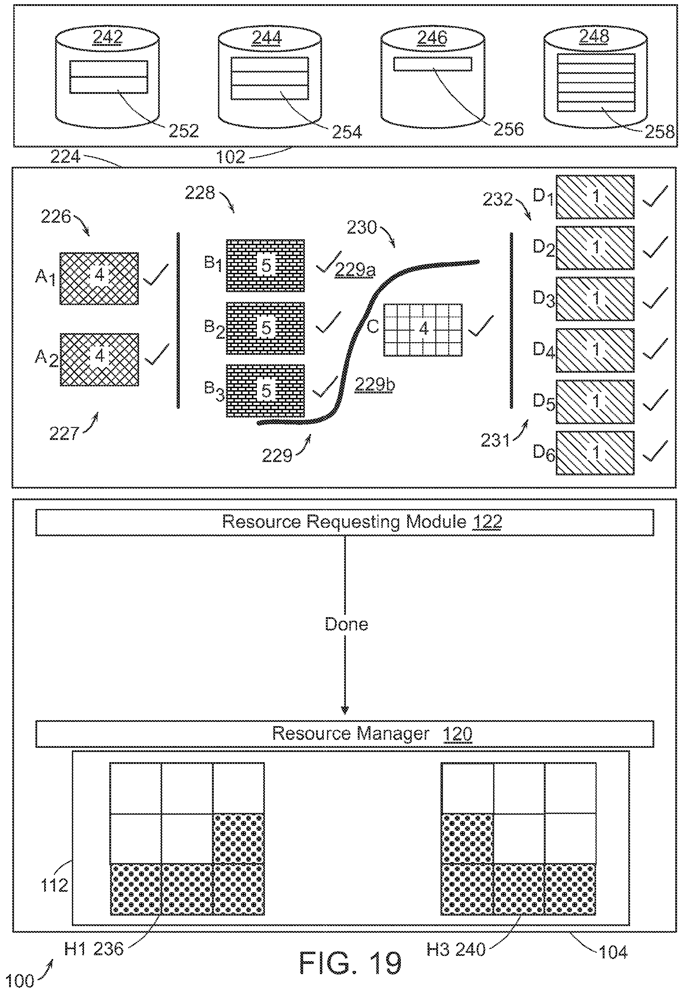

Referring to FIG. 19, when execution of the six instances of the fourth program component, D 232 using the granted computational resource units is complete and the results of the execution are stored, the resource requesting module 122 sends a "Done" message to the resource manager 120 indicating that execution is complete. The resource requesting module 122 marks the instances of the fourth program component, D 232 as complete (shown as checkmarks in the figure). With the six instances of the fourth program component, D 232 finished executing, the third and final phase 231 of the data processing graph is complete and the granted computational resources are relinquished.

### 5 Alternatives

In some examples, execution of phases of a data processing graph may partially overlap and output data from one phase may be streamed to a subsequent phase rather than being stored to disk.

In some examples, the resource manager does not provide any indication of a quantity of computational resources available on the computing system. Rather, the resource manager accepts requests for computational resources and fulfills the requests (fully or partially) based on the computational resources available at the time of the request.

In the example described above, execution is rolled back due to a node failure. In other examples, execution is rolled back when the resource manager 120 "revokes", or "preempts" computational resources from the resource requesting module 122, usually without notice. For example, if another application requests resources on node H2 238, the resource manager 120 may determine that that another application is more important and revoke computational resources that have already been granted to an application. The rollback procedure described above is used to allocate new computational resources to replace the revoked resources.

In some examples, such as the examples described above, after computational resources for a phase are revoked, the entire phase is rolled back and restarted. In other examples, only program components of the phase that were using the preempted or revoked resources have their execution rolled back. Doing so advantageously avoids redundant work of rerunning program components that did not have their computational resources revoked.

In the examples described above, the resource manager receives requests for computational resources and grants the resources if they are available. In other examples, the computational resource manager offers computational resources to programs wishing to execute in the execution environment rather than receiving requests. In such an arrangement, rather than making requests to the resource manager, programs listen to a stream of "offers" for available computational resources, and programs choose which (if any) of the offers they would like to take. One example of a resource manager that works this way is Apache Mesos.

Performing computation associated with a program or a program portion can also be referred to as executing the program or program portion. The program can be specified as a dataflow graph and the program portions can be specified as components of a dataflow graph. The program can be specified as a procedural program specification and the program portions can be specified as subroutines.

Partitioning of a portion of the program can be performed in a way that preserves an order of execution of at least some of the program components. Partitioning of a portion of the program portion can be performed in a way that maximizes a usage of the received computational resources while preserving an order of execution of at least some of the program components.

### 6 Implementations

The computational resource allocation approaches described above can be implemented, for example, using a programmable computing system executing suitable software instructions or it can be implemented in suitable hardware such as a field-programmable gate array (FPGA) or in some hybrid form. For example, in a programmed approach the software may include procedures in one or more computer programs that execute on one or more programmed or programmable computing system (which may be of various architectures such as distributed, client/server, or grid) each including at least one processor, at least one data storage system (including volatile and/or non-volatile memory and/or storage elements), at least one user interface (for receiving input using at least one input device or port, and for providing output using at least one output device or port). The software may include one or more modules of a larger program, for example, that provides services related to the design, configuration, and execution of data processing graphs. The modules of the program (e.g., elements of a data processing graph) can be implemented as data structures or other organized data conforming to a data model stored in a data repository.

The software may be stored in non-transitory form, such as being embodied in a volatile or non-volatile storage medium, or any other non-transitory medium, using a physical property of the medium (e.g., surface pits and lands, magnetic domains, or electrical charge) for a period of time (e.g., the time between refresh periods of a dynamic memory device such as a dynamic RAM). In preparation for loading the instructions, the software may be provided on a tangible, non-transitory medium, such as a CD-ROM or other computer-readable medium (e.g., readable by a general or special purpose computing system or device), or may be delivered (e.g., encoded in a propagated signal) over a communication medium of a network to a tangible, non-transitory medium of a computing system where it is executed. Some or all of the processing may be performed on a special purpose computer, or using special-purpose hardware, such as coprocessors or field-programmable gate arrays (FPGAs) or dedicated, application-specific integrated circuits (ASICs). The processing may be implemented in a distributed manner in which different parts of the computation specified by the software are performed by different computing elements. Each such computer program is preferably stored on or downloaded to a computer-readable storage medium (e.g., solid state memory or media, or magnetic or optical media) of a storage device accessible by a general or special purpose programmable computer, for configuring and operating the computer when the storage device medium is read by the computer to perform the processing described herein. The inventive system may also be considered to be implemented as a tangible, non-transitory medium, configured with a computer program, where the medium so configured causes a computer to operate in a specific and predefined manner to perform one or more of the processing steps described herein.

A number of embodiments of the invention have been described. Nevertheless, it is to be understood that the foregoing description is intended to illustrate and not to limit the scope of the invention, which is defined by the scope of the following claims.

## Claims

1. A method for performing a distributed computation on a computing system (100) using computational resources dynamically allocated using a computational resource manager (120), the method including:
storing information specifying quantities of computational resources associated with respective ones of a plurality of program portions of the program (224), where the program portions perform successive transformations of data and each program portion uses computational resources granted by the computational resource manager (120) enabling that program portion to be executed in the computing system (100);
requesting a first quantity of computational resources associated with a first program portion of the plurality of program portions from the computational resource manager (120);
receiving a second quantity of computational resources from the computational resource manager (120), less than the requested first quantity of computational resources;
performing computation associated with the first portion of the program (224) using the second quantity of computational resources;
while performing the computation associated with the first portion of the program (224) using the second quantity of computational resources, receiving an additional quantity of computational resources from the computational resource manager (120); and
performing additional computation associated with the first portion of the program (224) using the additional quantity of computational resources while performing computation associated with the first portion using the second quantity of computational resources.

2. The method of claim 1 wherein the information specifying quantities of computational resources associated with respective ones of a plurality of program portions of the program (224) includes characteristics of one or more program components (226, 228, 230, 232) associated with the respective ones of the plurality of program portions, preferably wherein the characteristics include a degree of parallelism associated with each of the one or more program components (226, 228, 230, 232) and a quantity of computational resources required for each of the one or more program components (226, 228, 230, 232) to execute, preferably wherein the quantity of computational resources associated with a program portion of the plurality of program portions is determined based at least in part on the degree of parallelism associated with each of the one or more program components (226, 228, 230, 232) and the quantity of computational resources required for each of the one or more program components (226, 228, 230, 232) to execute.

3. The method of claim 1 or 2 wherein executing computation associated with the first portion of the program (224) using the second quantity of computational resources includes partitioning the first program portion into a plurality of sub-portions according to the received second quantity of computational resources, preferably wherein performing computation associated with the first portion of the program (224) using the second quantity of computational resources includes performing computation for a first sub-portion of the plurality of sub-portions using the second quantity of computational resources while one or more other sub-portions of the plurality of sub-portions wait to perform computation, preferably such that the first sub-portion is the sub-portion among the plurality of sub-portions that is configured to use most or all of the second quantity of computational resources for execution.

4. The method of claim 3 wherein performing computation associated with the first portion of the program (224) using the additional quantity of computational resources includes repartitioning the first program portion into an updated plurality of sub-portions according to the received second quantity of computational resources and the received additional quantity of computational resources.

5. The method of claim 4, wherein performing computation associated with the first portion of the program (224) using the additional quantity of computational resources includes performing computation associated with a first sub-portion of the updated plurality of sub-portions using the additional quantity of computational resources while one or more other sub-portions of the updated plurality of sub-portions wait to perform computation, preferably such that the first sub-portion of the updated plurality of sub-portions is the sub-portion among the updated plurality of sub-portions that is configured to use most or all of the additional quantity of computational resources for performing computation.

6. The method of claim 4 or 5, performing computation associated with the first program portion of the program (224) using the additional quantity of computational resources includes performing computation associated with the first sub-portion of the plurality of sub-portions using the second quantity of computational resources and performing computation associated with an additional part of the first portion using the additional quantity of computational resources.

7. The method of any one of claims 4 to 6, wherein the first sub-portion of the updated plurality of sub-portions is an expanded version of the first sub-portion of the plurality of sub-portions formed by adding one or more instances (A1, A2, C, B1, B2, B3, D1, D2, D3, D4, D5, D6) of one or more program components (226, 228, 230, 232) of the first program portion from the other one or more sub-portions of the plurality of sub-portions to the first sub-portion of the plurality of sub-portions to obtain the first sub-portion of the updated plurality of sub-portions.

8. The method of any one of claims 3 to 7 wherein partitioning the first program portion into a plurality of sub-portions includes partitioning the first program portion according to characteristics of one or more of program components (226, 228, 230, 232) associated with the first program portion, preferably wherein the characteristics of the plurality of program portions include a degree of parallelism associated with each of the one or more program components (226, 228, 230, 232) and a quantity of computational resources required for each of the one or more program components (226, 228, 230, 232) to execute, preferably wherein a first one or more instances (A1, A2, C, B1, B2, B3, D1, D2, D3, D4, D5, D6) of a first program component are partitioned into the first sub-portion and a second one or more instances (A1, A2, C, B1, B2, B3, D1, D2, D3, D4, D5, D6) of the first program component are partitioned into a second sub-portion.

9. The method of any one of claims 1 to 8 further including relinquishing the second quantity of computational resources and the additional quantity of computational resources upon completion of execution of the first program portion.

10. The method of any one of claims 1 to 9 further including retaining at least some of the second quantity of computational resources and the additional quantity of computational resources upon completion of execution of the first program portion, preferably further including performing computation associated with a second portion of the program (224) using at least some of the retained computational resources.

11. The method of any one of claims 1 to 10 wherein a third quantity of the received computational resources become unavailable during the performing of computation associated with the first program portion, the method further including
requesting the third quantity of computational resources from the computational resource manager (120),
receiving the third quantity of computational resources from the computational resource manager (120), and
continuing performing computation associated with the first program portion using the received third quantity of computational resources.

12. The method of any one of claims 1 to **11** wherein the computational resource manager (120) is opaque regarding a quantity of computational resources available for the computing system.

13. The method of any one of claims 1 to 12 further including storing output data from the first program portion and performing computation associated with a second program portion of the plurality of program portions including reading and processing the stored output data, and/or further including performing computation associated with a second program portion of the plurality of program portions including receiving and processing a stream of output data from the first program portion.

14. A system (100) for performing a distributed computation using computational resources of a computing system dynamically allocated using a computational resource manager (120), the system (100) including a processor and a storage medium storing instructions, which when executed by the processor causes the system (100) to perform the method of any one of claims 1 to 13.

15. A non-transitory a computer-readable medium storing instructions for causing a computing system to perform the method of any one of claims 1 to 13.

## Patentansprüche

1. Verfahren zum Durchführen einer verteilten Berechnung auf einem Computersystem (100) unter Verwendung von Computerressourcen, die unter Verwendung eines Computerressourcenmanagers (120) dynamisch zugewiesen werden, das Verfahren umfassend:
Speichern von Informationen, die Mengen von Computerressourcen angeben, die entsprechenden einer Vielzahl von Programmabschnitten des Programms (224) zugeordnet sind, wobei die Programmabschnitte sukzessive Transformationen von Daten durchführen und jeder Programmabschnitt Computerressourcen verwendet, die durch den Computerressourcenmanager (120) zugeteilt werden, sodass die Ausführung dieses Programmabschnitts im Computersystem (100) ermöglicht wird;
Anfordern einer ersten Menge von Computerressourcen, die einem ersten Programmabschnitt der Vielzahl von Programmabschnitten zugeordnet ist, von dem Computerressourcenmanager (120);
Empfangen einer zweiten Menge von Computerressourcen von dem Computerressourcenmanager (120), die geringer ist als die angeforderte erste Menge von Computerressourcen;
Durchführen einer Berechnung, die dem ersten Abschnitt des Programms (224) zugeordnet ist, unter Verwendung der zweiten Menge von Computerressourcen;
während des Durchführens der Berechnung, die dem ersten Abschnitt des Programms (224) zugeordnet ist, unter Verwendung der zweiten Menge von Computerressourcen, Empfangen einer zusätzlichen Menge von Computerressourcen von dem Computerressourcenmanager (120); und
Durchführen einer zusätzlichen Berechnung, die dem ersten Abschnitt des Programms (224) zugeordnet ist, unter Verwendung der zusätzlichen Menge von Computerressourcen, während die Berechnung, die dem ersten Abschnitt zugeordnet ist, unter Verwendung der zweiten Menge von Computerressourcen durchgeführt wird.

2. Verfahren nach Anspruch 1, wobei die Informationen, die Mengen von Computerressourcen angeben, die entsprechenden einer Vielzahl von Programmabschnitten des Programms (224) zugeordnet sind, Merkmale einer oder mehreren Programmkomponenten (226, 228, 230, 232) umfassen, die entsprechenden der Vielzahl von Programmabschnitten zugeordnet sind, wobei vorzugsweise die Merkmale einen Grad an Parallelismus, der jeder der einen oder mehreren Programmkomponenten (226, 228, 230, 232) zugeordnet ist, und eine Menge von Computerressourcen, die für die Ausführung jeder der einen oder mehreren Programmkomponenten (226, 228, 230, 232) erforderlich ist, umfassen, wobei vorzugsweise die Menge von Computerressourcen, die einem Programmabschnitt der Vielzahl von Programmabschnitten zugeordnet ist, zumindest teilweise basierend auf dem Grad an Parallelismus, der jeder der einen oder mehreren Programmkomponenten (226, 228, 230, 232) zugeordnet ist, und der Menge von Computerressourcen, die für die Ausführung jeder der einen oder mehreren Programmkomponenten (226, 228, 230, 232) erforderlich ist, bestimmt wird.

3. Verfahren nach Anspruch 1 oder 2, wobei das Durchführen einer Berechnung, die dem ersten Abschnitt des Programms (224) zugeordnet ist, unter Verwendung der zweiten Menge von Computerressourcen, das Partitionieren des ersten Programmabschnitts in eine Vielzahl von Unterabschnitten entsprechend der empfangenen zweiten Menge von Computerressourcen umfasst, wobei vorzugsweise das Durchführen einer Berechnung, die dem ersten Abschnitt des Programms (224) zugeordnet ist, unter Verwendung der zweiten Menge von Computerressourcen, das Durchführen einer Berechnung für einen ersten Unterabschnitt der Vielzahl von Unterabschnitten unter Verwendung der zweiten Menge von Computerressourcen umfasst, während ein oder mehrere andere Unterabschnitte der Vielzahl von Unterabschnitten darauf warten, eine Berechnung durchzuführen, vorzugsweise derart, dass der erste Unterabschnitt der Unterabschnitt unter der Vielzahl von Unterabschnitten ist, der dazu konfiguriert ist, den größten Teil oder die Gesamtheit der zweiten Menge von Computerressourcen für die Ausführung zu verwenden.

4. Verfahren nach Anspruch 3, wobei das Durchführen einer Berechnung, die dem ersten Abschnitt des Programms (224) zugeordnet ist, unter Verwendung der zusätzlichen Menge von Computerressourcen, das Neupartitionieren des ersten Programmabschnitts in eine aktualisierte Vielzahl von Unterabschnitten entsprechend der empfangenen zweiten Menge von Computerressourcen und der empfangenen zusätzlichen Menge von Computerressourcen umfasst.

5. Verfahren nach Anspruch 4, wobei das Durchführen einer Berechnung, die dem ersten Abschnitt des Programms (224) zugeordnet ist, unter Verwendung der zusätzlichen Menge von Computerressourcen, das Durchführen einer Berechnung umfasst, die einem ersten Unterabschnitt der aktualisierten Vielzahl von Unterabschnitten zugeordnet ist, unter Verwendung der zusätzlichen Menge von Computerressourcen, während ein oder mehrere andere Unterabschnitte der aktualisierten Vielzahl von Unterabschnitten darauf warten, eine Berechnung durchzuführen, vorzugsweise derart, dass der erste Unterabschnitt der aktualisierten Vielzahl von Unterabschnitten der Unterabschnitt unter der aktualisierten Vielzahl von Unterabschnitten ist, der dazu konfiguriert ist, den größten Teil oder die Gesamtheit der zusätzlichen Menge von Computerressourcen für das Durchführen der Berechnung zu verwenden.

6. Verfahren nach Anspruch 4 oder 5, wobei das Durchführen einer Berechnung, die dem ersten Programmabschnitt des Programms (224) zugeordnet ist, unter Verwendung der zusätzlichen Menge von Computerressourcen, das Durchführen einer Berechnung umfasst, die dem ersten Unterabschnitt der Vielzahl von Unterabschnitten zugeordnet ist, unter Verwendung der zweiten Menge von Computerressourcen, sowie das Durchführen einer Berechnung, die einem zusätzlichen Teil des ersten Programmabschnitts zugeordnet ist, unter Verwendung der zusätzlichen Menge von Computerressourcen.

7. Verfahren nach einem der Ansprüche 4 bis 6, wobei der erste Unterabschnitt der aktualisierten Vielzahl von Unterabschnitten eine erweiterte Version des ersten Unterabschnitts der Vielzahl von Unterabschnitten ist, die dadurch gebildet wird, dass eine oder mehrere Instanzen (A1, A2, C, B1, B2, B3, D1, D2, D3, D4, D5, D6) einer oder mehrerer Programmkomponenten (226, 228, 230, 232) des ersten Programmabschnitts aus den anderen ein oder mehreren Unterabschnitten der Vielzahl von Unterabschnitten dem ersten Unterabschnitt der Vielzahl von Unterabschnitten hinzugefügt werden, um den ersten Unterabschnitt der aktualisierten Vielzahl von Unterabschnitten zu erhalten.

8. Verfahren nach einem der Ansprüche 3 bis 7, wobei das Partitionieren des ersten Programmabschnitts in eine Vielzahl von Unterabschnitten das Partitionieren des ersten Programmabschnitts entsprechend Merkmalen einer oder mehrerer Programmkomponenten (226, 228, 230, 232) umfasst, die dem ersten Programmabschnitt zugeordnet sind, wobei vorzugsweise die Merkmale der Vielzahl von Programmabschnitten einen Grad an Parallelismus, der jeweils jeder der einen oder mehreren Programmkomponenten (226, 228, 230, 232) zugeordnet ist, und eine Menge von Computerressourcen, die für die Ausführung jeder der einen oder mehreren Programmkomponenten (226, 228, 230, 232) erforderlich ist, umfassen, wobei vorzugsweise eine erste von einer oder mehreren Instanzen (A1, A2, C, B1, B2, B3, D1, D2, D3, D4, D5, D6) einer ersten Programmkomponente in den ersten Unterabschnitt partitioniert werden und eine zweite von einer oder mehreren Instanzen (A1, A2, C, B1, B2, B3, D1, D2, D3, D4, D5, D6) der ersten Programmkomponente in einen zweiten Unterabschnitt partitioniert werden.

9. Verfahren nach einem der Ansprüche 1 bis 8, ferner umfassend das Freigeben der zweiten Menge von Computerressourcen und der zusätzlichen Menge von Computerressourcen nach Abschluss der Ausführung des ersten Programmabschnitts.

10. Verfahren nach einem der Ansprüche 1 bis 9, ferner umfassend das Beibehalten zumindest eines Teils der zweiten Menge von Computerressourcen und der zusätzlichen Menge von Computerressourcen nach Abschluss der Ausführung des ersten Programmabschnitts, vorzugsweise ferner umfassend das Durchführen einer Berechnung, die einem zweiten Abschnitt des Programms (224) zugeordnet ist, unter Verwendung zumindest eines Teils der beibehaltenen Computerressourcen.

11. Verfahren nach einem der Ansprüche 1 bis 10, wobei eine dritte Menge von empfangenen Computerressourcen während des Durchführens einer Berechnung, die dem ersten Programmabschnitt zugeordnet ist, nicht mehr verfügbar wird, das Verfahren ferner umfassend:
Anfordern der dritten Menge von Computerressourcen von dem Computerressourcenmanager (120),
Empfangen der dritten Menge von Computerressourcen von dem Computerressourcenmanager (120), und
Fortsetzen des Durchführens einer Berechnung, die dem ersten Programmabschnitt zugeordnet ist, unter Verwendung der empfangenen dritten Menge von Computerressourcen.

12. Verfahren nach einem der Ansprüche 1 bis 11, wobei der Computerressourcenmanager (120) hinsichtlich einer Menge von für das Computersystem verfügbaren Computerressourcen undurchsichtig ist.

13. Verfahren nach einem der Ansprüche 1 bis 12, ferner umfassend das Speichern von Ausgabedaten des ersten Programmabschnitts und das Durchführen einer Berechnung, die einem zweiten Programmabschnitt der Vielzahl von Programmabschnitten zugeordnet ist, umfassend das Lesen und Verarbeiten der gespeicherten Ausgabedaten, und/oder ferner umfassend das Durchführen einer Berechnung, die einem zweiten Programmabschnitt der Vielzahl von Programmabschnitten zugeordnet ist, umfassend das Empfangen und Verarbeiten eines Datenstroms von Ausgabedaten des ersten Programmabschnitts.

14. System (100) zum Durchführen einer verteilten Berechnung unter Verwendung von Computerressourcen eines Computersystems, die unter Verwendung eines Computerressourcenmanagers (120) dynamisch zugewiesen werden, wobei das System (100) einen Prozessor und ein Speichermedium umfasst, das Anweisungen speichert, die bei Ausführung durch den Prozessor das System (100) veranlassen, das Verfahren nach einem der Ansprüche 1 bis 13 durchzuführen.

15. Nichtflüchtiges, computerlesbares Medium, das Anweisungen zum Veranlassen eines Computersystems speichert, das Verfahren nach einem der Ansprüche 1 bis 13 durchzuführen.

## Revendications

1. Procédé de réalisation d'une computation distribuée sur un système de computation (100) en utilisant des ressources computationnelles attribuées dynamiquement en utilisant un gestionnaire de ressources computationnelles (120), le procédé incluant :
le stockage d'informations spécifiant des quantités de ressources computationnelles associées à des portions respectives d'une pluralité de portions de programme du programme (224), où les portions de programme réalisent des transformations successives de données et chaque portion de programme utilise des ressources computationnelles accordées par le gestionnaire de ressources computationnelles (120) permettant à cette portion de programme d'être exécutée dans le système de computation (100) ;
la demande d'une première quantité de ressources computationnelles associées à une première portion de programme de la pluralité de portions de programme auprès du gestionnaire de ressources computationnelles (120) ;
la réception d'une deuxième quantité de ressources computationnelles en provenance du gestionnaire de ressources computationnelles (120), inférieure à la première quantité demandée de ressources computationnelles ;
la réalisation d'une computation associée à la première portion du programme (224) en utilisant la deuxième quantité de ressources computationnelles ;
durant la réalisation de la computation associée à la première portion du programme (224) en utilisant la deuxième quantité de ressources computationnelles, la réception d'une quantité supplémentaire de ressources computationnelles en provenance du gestionnaire de ressources computationnelles (120) ; et
la réalisation d'une computation supplémentaire associée à la première portion du programme (224) en utilisant la quantité supplémentaire de ressources computationnelles durant la réalisation d'une computation associée à la première portion en utilisant la deuxième quantité de ressources computationnelles.

2. Procédé de la revendication 1, dans lequel les informations spécifiant des quantités de ressources computationnelles associées à des portions respectives d'une pluralité de portions de programme du programme (224) inclut des caractéristiques d'un ou de plusieurs composants de programme (226, 228, 230, 232) associés aux portions respectives de la pluralité de portions de programme, de préférence dans lequel les caractéristiques incluent un degré de parallélisme associé à chacun de l'un ou des plusieurs composants de programme (226, 228, 230, 232) et une quantité de ressources computationnelles requises pour l'exécution de chacun de l'un ou des plusieurs composants de programme (226, 228, 230, 232), de préférence dans lequel la quantité de ressources computationnelles associée à une portion de programme de la pluralité de portions de programme est déterminée sur la base au moins en partie du degré de parallélisme associé à chacun de l'un ou des plusieurs composants de programme (226, 228, 230, 232) et de la quantité de ressources computationnelles requises pour l'exécution de chacun de l'un ou des plusieurs composants de programme (226, 228, 230, 232).

3. Procédé de la revendication 1 ou 2, dans lequel l'exécution d'une computation associée à la première portion du programme (224) en utilisant la deuxième quantité de ressources computationnelles inclut le partitionnement de la première portion de programme en une pluralité de sous-portions selon la deuxième quantité reçue de ressources computationnelles, de préférence dans lequel la réalisation d'une computation associée à la première portion du programme (224) en utilisant la deuxième quantité de ressources computationnelles inclut la réalisation d'une computation pour une première sous-portion de la pluralité de sous-portions en utilisant la deuxième quantité de ressources computationnelles alors qu'une ou plusieurs autres sous-portions de la pluralité de sous-portions attendent de réaliser une computation, de préférence de manière telle que la première sous-portion est la sous-portion, parmi la pluralité de sous-portions, qui est configurée pour utiliser la plupart ou la totalité de la deuxième quantité de ressources computationnelles pour l'exécution.

4. Procédé de la revendication 3, dans lequel la réalisation d'une computation associée à la première portion du programme (224) en utilisant la quantité supplémentaire de ressources computationnelles inclut le repartitionnement la première portion de programme en une pluralité mise à jour de sous-portions selon la deuxième quantité reçue de ressources computationnelles et la quantité supplémentaire reçue de ressources computationnelles.

5. Procédé de la revendication 4, dans lequel la réalisation d'une computation associée à la première portion du programme (224) en utilisant la quantité supplémentaire de ressources computationnelles inclut la réalisation d'une computation associée à une première sous-portion de la pluralité mise à jour de sous-portions en utilisant la quantité supplémentaire de ressources computationnelles alors qu'une ou plusieurs autres sous-portions de la pluralité mise à jour de sous-portions attendent de réaliser une computation, de préférence de manière telle que la première sous-portion de la pluralité mise à jour de sous-portions est la sous-portion parmi la pluralité mise à jour de sous-portions qui est configurée pour utiliser la plupart ou la totalité de la quantité supplémentaire de ressources computationnelles pour réaliser une computation.

6. Procédé de la revendication 4 ou 5, dans lequel la réalisation d'une computation associée à la première portion de programme du programme (224) en utilisant la quantité supplémentaire de ressources computationnelles inclut la réalisation d'une computation associée à la première sous-portion de la pluralité de sous-portions en utilisant la deuxième quantité de ressources computationnelles et la réalisation d'une computation associée à une partie supplémentaire de la première portion en utilisant la quantité supplémentaire de ressources computationnelles.

7. Procédé de l'une quelconque des revendications 4 à 6, dans lequel la première sous-portion de la pluralité mise à jour de sous-portions est une version développée de la première sous-portion de la pluralité de sous-portions formée en ajoutant une ou plusieurs instances (A1, A2, C, B1, B2, B3, D1, D2, D3, D4, D5, D6) d'un ou de plusieurs composants de programme (226, 228, 230, 232) de la première portion de programme en provenance de l'une ou des plusieurs autres sous-portions de la pluralité de sous-portions à la première sous-portion de la pluralité de sous-portions pour obtenir la première sous-portion de la pluralité mise à jour de sous-portions.

8. Procédé de l'une quelconque des revendications 3 à 7, dans lequel le partitionnement la première portion de programme en une pluralité de sous-portions inclut le partitionnement de la première portion de programme selon des caractéristiques d'un ou de plusieurs de composants de programme (226, 228, 230, 232) associés à la première portion de programme, de préférence dans lequel les caractéristiques de la pluralité de portions de programme incluent un degré de parallélisme associé à chacun de l'un ou des plusieurs composants de programme (226, 228, 230, 232) et une quantité de ressources computationnelles requises pour l'exécution de chacun de l'un ou des plusieurs composants de programme (226, 228, 230, 232), de préférence dans lequel une ou plusieurs premières instances (A1, A2, C, B1, B2, B3, D1, D2, D3, D4, D5, D6) d'un premier composant de programme sont partitionnées en la première sous-portion et une ou plusieurs secondes instances (A1, A2, C, B1, B2, B3, D1, D2, D3, D4, D5, D6) du premier composant de programme sont partitionnées en une seconde sous-portion.

9. Procédé de l'une quelconque des revendications 1 à 8, incluant en outre l'abandon de la deuxième quantité de ressources computationnelles et de la quantité supplémentaire de ressources computationnelles à la suite de l'achèvement de l'exécution de la première portion de programme.

10. Procédé de l'une quelconque des revendications 1 à 9, incluant en outre la retenue d'au moins certaines de la deuxième quantité de ressources computationnelles et de la quantité supplémentaire de ressources computationnelles à la suite de l'achèvement de l'exécution de la première portion de programme, de préférence incluant en outre la réalisation d'une computation associée à une seconde portion du programme (224) en utilisant au moins certaines des ressources computationnelles retenues.

11. Procédé de l'une quelconque des revendications 1 à 10, dans lequel une troisième quantité des ressources computationnelles reçues deviennent indisponibles durant la réalisation d'une computation associée à la première portion de programme, le procédé incluant en outre
la demande de la troisième quantité de ressources computationnelles auprès du gestionnaire de ressources computationnelles (120),
la réception de la troisième quantité de ressources computationnelles en provenance du gestionnaire de ressources computationnelles (120), et
la continuation de la réalisation d'une computation associée à la première portion de programme en utilisant la troisième quantité reçue de ressources computationnelles.

12. Procédé de l'une quelconque des revendications 1 à 11, dans lequel le gestionnaire de ressources computationnelles (120) est opaque en ce qui concerne une quantité de ressources computationnelles disponibles pour le système de computation.

13. Procédé de l'une quelconque des revendications 1 à 12, incluant en outre le stockage de données de sortie en provenance de la première portion de programme et la réalisation d'une computation associée à une seconde portion de programme de la pluralité de portions de programme incluant la lecture et le traitement des données de sortie stockées, et/ou incluant en outre la réalisation d'une computation associée à une seconde portion de programme de la pluralité de portions de programme incluant la réception et le traitement d'un flux de données de sortie en provenance de la première portion de programme.

14. Système (100) pour réaliser une computation distribuée en utilisant des ressources computationnelles d'un système de computation attribuées dynamiquement en utilisant un gestionnaire de ressources computationnelles (120), le système (100) incluant un processeur et un support de stockage stockant des instructions, qui, lorsqu'elles sont exécutées par le processeur, amènent le système (100) à réaliser le procédé de l'une quelconque des revendications 1 à 13.

15. Support non transitoire lisible par ordinateur, stockant des instructions pour amener un système de computation à réaliser le procédé de l'une quelconque des revendications 1 à 13.
